# EUROPEAN PATENT SPECIFICATION

(11) **EP 4 287 067 B1**
(45) Date of publication and mention of the grant of the patent: **02.09.2026**
(21) Application number: 21927514.6
(22) Date of filing: 17.09.2021
(51) Int. Cl.: G06V 10/82, G06V 10/774, G06V 20/56, G06V 10/94, G06V 10/26

(54) **DATA PROCESSING METHOD AND APPARATUS, AND SYSTEM**
DATENVERARBEITUNGSVERFAHREN UND -VORRICHTUNG SOWIE SYSTEM
PROCÉDÉ ET APPAREIL DE TRAITEMENT DE DONNÉES, ET SYSTÈME

(30) Priority: 25.02.2021 CN 202110215030
(43) Date of publication of application: 06.12.2023
(73) Proprietor: Yinwang Intelligent Technologies Co., Ltd., Shenzhen, Guangdong 518110 (CN)
(72) Inventor: CHEN, Lei, Shenzhen, Guangdong 518129 (CN)
(74) Representative: MERH-IP Matias Erny Reichl Hoffmann Patentanwälte PartG mbB
(86) International application number: PCT/CN2021/118936
(87) International publication number: WO 2022/179088

(56) References cited:
- EP-A1- 3 576 020
- CN-A- 108 765 278
- CN-A- 109 242 775
- CN-A- 110 096 937
- CN-A- 111 160 100
- CN-A- 111 626 218
- CN-A- 112 183 456
- US-A1- 2022 237 829

## Description

### CROSS-REFERENCE TO RELATED APPLICATIONS

### TECHNICAL FIELD

This application relates to the field of internet of vehicles technologies, and in particular, to a data processing method, apparatus, and system.

### BACKGROUND

In the field of autonomous driving, a large amount of data needs to be collected for training, to obtain a target recognition model. The target recognition model is usually directly obtained through training by using a real target building image that can be obtained. However, in actual life, there are some target buildings that cannot be photographed or are difficult to photograph. Images of such target buildings are mainly obtained by manually searching a network, and a very limited quantity of images are obtained. Consequently, there is a lack of such samples, and it is clear that a target recognition model with a good recognition effect cannot be obtained through training due to insufficient training data. In this case, if the target recognition model with a good recognition effect needs to be obtained through training, more types of target building images need to be obtained.

Therefore, how to obtain more types of target images (for example, target building images) becomes an urgent problem that needs to be resolved currently.

CN111626218A discloses an artificial intelligence-based image generation method performed by a computer device. The method comprises acquiring a source image and a target image, wherein the source image comprises a target object whose pose is to be transformed, and the target image comprises a reference object presenting a target pose. The method further comprises determining a pose transition matrix according to a model pose corresponding to the pose of the target object and a model pose corresponding to the target pose of the reference object, extracting an appearance feature of the target object from the source image as a basic appearance feature, processing the basic appearance feature based on the pose transition matrix to obtain a target appearance feature of the target object in the target pose, and generating a target synthetic image of the target object in the target pose based on the target appearance feature. CN109242775A discloses an attribute information migration method. The method includes acquiring a first image containing a target attribute information and a second image without the target attribute information, segmenting the target attribute information from the first image, and synthesizing the target attribute information into the second image to obtain a target image that includes the target attribute information.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide a data processing method, apparatus, and system, to obtain more types of target images.

According to a first aspect, this application provides a data processing method. The method may be implemented by a server or a vehicle, or may be implemented by a chip deployed in a server or a vehicle. The server is used as an example. The method may include: The server obtains a first image and a first mark used to indicate a target image; fuses the first mark into the first image, to generate a sample data set of the first image; and then determines a target sample data set that matches the target image from the sample data set of the first image.

In this solution, the target sample data set similar to the target image is obtained through fusion by using the first mark indicating the target image and the first image that is easy to obtain. In this way, more types of target sample data that is more similar to the target image can be generated, and it does not need to take a long time to perform manual collection. In this solution, only a small quantity of target images need to be prepared as a reference, to implement a change of the target sample data from 0 to 1 (that is, from nothing to something, for example, from nothing to a small amount). This helps resolve a problem that the target image is difficult to capture and corresponds to a small quantity of types. When the target image is a target building image, more types of simulated building images can be obtained through generation in this manner, and are used as the target building image for model training. Further, a target recognition model is trained by using these more types of generated real target sample data sets. This further helps improve a generalization capability and a recognition effect of the target recognition model by increasing a quantity of types of training data.

In a possible design, the target image includes the first image, that is, the first image can be separated from the target image, but the target image cannot be separated from the first image. In the field of autonomous driving, the target image needs to be obtained by photographing a target building that cannot be photographed or is difficult to photograph, and the first image may be obtained by photographing a non-target building that can be photographed or is easy to photograph, or may be obtained by directly obtaining various types of building images in a manner such as downloading from a network. The first image is easier to obtain and corresponds to a larger quantity of types than the target image. In this way, in this design, the first image can be obtained in a simple and easy-to-implement obtaining manner without capturing the target image, and then an image similar to the target image can be generated. This helps reduce labor and material costs.

In a possible design, that the server fuses the first mark into the first image, to generate a sample data set of the first image includes: The server determines a second image from the first image; and fuses the first mark into the second image, to generate the sample data set of the first image. The second image may be a small quantity of first images that are selected from the first image and that cover various types. In this way, more types of sample data can be generated as much as possible while data processing pressure of the server is reduced.

In a possible design, that the server determines a target sample data set that matches the target image from the sample data set of the first image includes: The server inputs the sample data set of the first image and the target image to a first discriminative model, to obtain a first output result, where the first output result is used to indicate an association relationship between sample data in the sample data set of the first image and the target image; and the server may determine the target sample data set from the sample data set of the first image based on the first output result. In this design, with reference to the target image, some sample data that is obviously different from the target image is screened out in advance from the generated sample data set, so that only the target sample data similar to the target image can be retained to perform subsequent data processing. This helps improve accuracy of subsequent data processing while saving computing resources.

In a possible design, the server may further input the target sample data set, the first mark, and the first image to a first simulation model, to obtain target simulated data of the first image. In this design, the server can obtain more target simulated data similar to the target image through extension by using a small amount of target sample data, to implement a change of the target simulated data from 1 to infinity.

In a possible design, the first simulation model may include a first generative model and a second discriminative model. In this case, that the server inputs the target sample data set, the first mark, and the first image to a first simulation model, to obtain target simulated data of the first image includes: The server first inputs the target sample data set, the first mark, and the first image to the first generative model, to obtain a first simulated data set having a same feature as the target sample data set; and then inputs the first simulated data set and a preset target data set to the second discriminative model, to obtain a second output result, where the second output result is used to indicate an association relationship between first simulated data in the first simulated data set and the target image and an association relationship between target data in the preset target data set and the target image; and the server may generate the target simulated data of the first image when the second output result meets a preset determining condition.

In this design, the second discriminative model and the first generative model are continuously optimized by using an adversarial relationship between the second discriminative model and the first generative model in an adversarial neural network model, to achieve a training balance between the two models in continuous optimization and continuous adversarial training, so that the server obtains a first generative model with a good generation effect with support of a second discriminative model with a good discrimination effect, to generate more types and a larger quantity of pieces of target simulated data that is more similar to the target image by using the first generative model with a good generation effect.

In a possible design, the preset target data set includes the target image and/or the target sample data set. In this design, the server can select, based on a requirement, to generate any one of the following target simulated data: target simulated data similar to the target sample data set, target simulated data similar to the target image prepared in advance, and target simulated data similar to both the target sample data set and the target image prepared in advance, to increase a degree of matching between the target simulated data and a real requirement.

In a possible design, the first output result or the second output result may include a third output result and a fourth output result, the third output result is used to indicate that input data includes the target image, the fourth output result is used to indicate that input data does not include the target image or whether input data includes the target image cannot be determined, and the input data may be sample data in the sample data set, first simulated data in the first simulated data set, or target data in the preset target data set.

In this design, the server may perform any one of the following content based on the second output result:

Content 1: When a quantity of pieces of target data that is in the target data set and that is determined by the second discriminative model as the third output result is not greater than a first preset quantity, it indicates that the second discriminative model incorrectly determines a large amount of target data that is originally real as fake, or cannot determine whether a large amount of target data that is originally real is real or fake, and a case of incorrect determining by the second discriminative model is severe. In this case, the server may adjust a parameter of the second discriminative model, to improve the discrimination effect of the second discriminative model as much as possible, then re-input the first simulated data set and the preset target data set to a second discriminative model obtained after parameter adjustment, repeatedly perform the foregoing process until a second discriminative model whose discrimination effect meets a requirement is obtained, and then perform the following content 2 or content 3.

Content 2: When a quantity of pieces of first simulated data that is in the first simulated data set and that is determined by the second discriminative model as the fourth output result is not less than a second preset quantity, it indicates that it is easier for the second discriminative model to recognize the first simulated data generated by the first generative model, and the first generative model cannot generate first simulated data for which it is difficult to distinguish between real and fake. In this case, the server may adjust a parameter of the first generative model, to improve the generation effect of the first generative model, then re-input the target sample data set, the first mark, and the first image to a first generative model obtained after parameter adjustment, repeatedly perform the foregoing process until a first generative model whose generation effect meets a requirement is obtained, and then perform the following content 3.

Content 3: When a quantity of pieces of target data that is in the target data set and that is determined by the second discriminative model as the third output result is greater than a first preset quantity, and a quantity of pieces of first simulated data that is in the first simulated data set and that is determined by the second discriminative model as the fourth output result is less than a second preset quantity, it indicates that a balance is achieved between the discrimination effect of the second discriminative model and the generation effect of the first generative model in continuous adversarial training. In this case, the server determines that parameter adjustment of the first generative model ends, and generates more types and a larger quantity of pieces of target simulated data that is more similar to the target image by using the first generative model with a good generation effect.

In a possible design, after inputting the target sample data set, the first mark, and the first image to the first simulation model, to obtain the target simulated data of the first image, the server may further obtain a target recognition model through training by using the target simulated data; and send the target recognition model to a vehicle, so that the vehicle recognizes, by using the target recognition model, a target image in environment data collected in a traveling process, and deletes or covers the target image in the environment data. Environment data obtained after the target image is deleted or covered may be used in any one of the following phases:

In a surveying and mapping phase of autonomous driving, the environment data obtained after the target image is deleted or covered may be used for training to obtain an autonomous driving map. In this way, a surveying and mapping vehicle can recognize the target image in an environment image in advance before reporting the environment image, to accurately delete or cover the target image that cannot be captured or is difficult to capture. This helps generate an autonomous driving map that does not include the target image.

In an application phase of autonomous driving, the environment data obtained after the target image is deleted or covered may be stored in a preset area, and environment data stored in the preset area is used to sequentially match the autonomous driving map to determine a traveling direction. In this way, a user vehicle first recognizes the target image in an environment image before storing the environment image. This helps store only an environment image that does not include the target image, and reduce space occupied for data storage.

According to a second aspect, this application provides a data processing apparatus, including: an obtaining unit, configured to obtain a first mark and a first image, where the first mark is used to indicate a target image; a fusion unit, configured to fuse the first mark into the first image, to generate a sample data set of the first image; and a determining unit, configured to determine a target sample data set that matches the target image from the sample data set of the first image.

In a possible design, the fusion unit is specifically configured to: determine a second image from the first image; and fuse the first mark into the second image, to generate the sample data set of the first image.

In a possible design, the determining unit is specifically configured to: input the sample data set of the first image and the target image to a first discriminative model, to obtain a first output result; and determine the target sample data set from the sample data set of the first image based on the first output result. The first output result is used to indicate an association relationship between sample data in the sample data set of the first image and the target image.

In a possible design, the data processing apparatus further includes a simulation unit, and the simulation unit is configured to input the target sample data set, the first mark, and the first image to a first simulation model, to obtain target simulated data of the first image.

In a possible design, the first simulation model may include a first generative model and a second discriminative model. In this case, the simulation unit is specifically configured to: input the target sample data set, the first mark, and the first image to the first generative model, to obtain a first simulated data set having a same feature as the target sample data set; input the first simulated data set and a preset target data set to the second discriminative model, to obtain a second output result; and generate the target simulated data of the first image when the second output result meets a preset determining condition. The second output result is used to indicate an association relationship between first simulated data in the first simulated data set and the target image and an association relationship between target data in the preset target data set and the target image.

In a possible design, the preset target data set may include the target image and/or the target sample data set.

In a possible design, the first output result or the second output result may include a third output result and a fourth output result, the third output result is used to indicate that input data includes the target image, the fourth output result is used to indicate that input data does not include the target image or whether input data includes the target image cannot be determined, and the input data is sample data in the sample data set, first simulated data in the first simulated data set, or target data in the preset target data set.

In a possible design, the simulation unit may perform any one of the following content based on the second output result:
Content 1: When a quantity of pieces of target data that is in the target data set and that is determined by the second discriminative model as the third output result is not greater than a first preset quantity, the simulation unit adjusts a parameter of the second discriminative model, and re-inputs the first simulated data set and the preset target data set to a second discriminative model obtained after parameter adjustment.
Content 2: When a quantity of pieces of first simulated data that is in the first simulated data set and that is determined by the second discriminative model as the fourth output result is not less than a second preset quantity, the simulation unit adjusts a parameter of the first generative model, and re-inputs the target sample data set, the first mark, and the first image to a first generative model obtained after parameter adjustment.
Content 3: When a quantity of pieces of target data that is in the target data set and that is determined by the second discriminative model as the third output result is greater than a first preset quantity, and a quantity of pieces of first simulated data that is in the first simulated data set and that is determined by the second discriminative model as the fourth output result is less than a second preset quantity, the simulation unit generates the target simulated data of the first image by using the first generative model.

In a possible design, the data processing apparatus further includes: a training unit, configured to obtain a target recognition model through training by using the target simulated data; and a transceiver unit, configured to send the target recognition model to a vehicle. The target recognition model is used by the vehicle to delete or cover a target image in environment data collected in a traveling process of the vehicle, environment data obtained after the target image is deleted or covered is used for training to obtain an autonomous driving map, or is stored in a preset area, and environment data stored in the preset area is used to sequentially match the autonomous driving map to determine a traveling direction.

In a possible design, the data processing apparatus may be a vehicle or a server. In this way, this solution may be applied to a scenario in which only a vehicle exists, or may be applied to a cloud scenario in which a vehicle is connected to a server.

According to a third aspect, this application provides a data processing apparatus, including a processor and a communication interface. The communication interface is configured to input and/or output data. The processor is configured to implement the data processing method in any design of the first aspect by using a logic circuit or executing code instructions.

According to a fourth aspect, this application provides a data processing system, including: a server, configured to perform the method in any design of the first aspect to obtain a target sample data set, obtain a target recognition model through training based on the target sample data set, and deliver the target recognition model to a vehicle; and the vehicle, configured to: collect environment data in a traveling process, input the environment data to the target recognition model, to recognize a target image in the environment data, and delete or cover the target image in the environment data. Environment data obtained after the target image is deleted or covered is used for training to obtain an autonomous driving map, or is stored in a preset area, and environment data stored in the preset area is used to sequentially match the autonomous driving map to determine a traveling direction.

In a possible design, the server may be a single server or a server cluster that includes a plurality of sub-servers. When the server is a server cluster that includes a plurality of sub-servers, the plurality of sub-servers in the server cluster may jointly perform the method in any design of the first aspect to obtain the target sample data set.

According to a fifth aspect, this application provides a data processing system, including a server and a vehicle. The server and the vehicle may jointly perform the method in any design of the first aspect to obtain target simulated data, to effectively reduce working pressure of the server or the vehicle. Examples are provided below.

In a case, the server may perform operations of obtaining a first mark indicating a target image and a first image, fusing the first mark into the first image, to generate a sample data set of the first image, and determining a target sample data set that matches the target image from the sample data set of the first image, the server may send the generated target sample data set to the vehicle, and the vehicle may perform an operation of inputting the target sample data set, the first mark, and the first image to a first simulation model, to obtain target simulated data of the first image. In this manner, a process of changing the target simulated data from 0 to 1 is performed on a server side, and a process of changing the target simulated data from 1 to infinity is performed on a vehicle side.

In another case, the vehicle may perform operations of obtaining a first mark indicating a target image and a first image, fusing the first mark into the first image, to generate a sample data set of the first image, and determining a target sample data set that matches the target image from the sample data set of the first image, the vehicle may send the generated target sample data set to the server, and the server may perform an operation of inputting the target sample data set, the first mark, and the first image to a first simulation model, to obtain target simulated data of the first image. In this manner, a process of changing the target simulated data from 0 to 1 is performed on a vehicle side, and a process of changing the target simulated data from 1 to infinity is performed on a server side.

According to a sixth aspect, this application provides a chip. The chip may include a processing circuit, an interface, and a silicon chip. The processing circuit and the interface are integrated on the silicon chip, and the processing circuit is configured to read instructions through the interface, to perform the data processing method in any design of the first aspect.

In a possible design, the chip may further include a memory. The memory is coupled to the processing circuit through the interface, and is configured to store the instructions, so that the processing circuit reads, through the interface, the instructions stored in the memory.

According to a seventh aspect, this application provides a computer-readable storage medium. The computer-readable storage medium stores a computer program. When the computer program is run, the data processing method in any design of the first aspect is implemented.

According to an eighth aspect, this application provides a computer program product. The computer program product includes a computer program or instructions. When the computer program or the instructions is or are executed by a communication apparatus, the data processing method in any design of the first aspect is implemented.

For specific beneficial effects of the second aspect to the eighth aspect, refer to the technical effects that can be achieved by the corresponding designs of the first aspect. Details are not described herein.

### BRIEF DESCRIPTION OF DRAWINGS

FIG. 1 is a schematic diagram of an autonomous driving system architecture to which an embodiment of this application is applicable;
FIG. 2 is an example of a schematic flowchart of a data processing method according to an embodiment of this application;
FIG. 3 is an example of a schematic flowchart of a method for generating target simulated data by using an adversarial neural network according to an embodiment of this application;
FIG. 4 is an example of a schematic flowchart of an application of a target simulated image according to an embodiment of this application;
FIG. 5 is an example of a schematic flowchart of another application of a target simulated image according to an embodiment of this application;
FIG. 6 is a schematic diagram of an architecture of a data processing apparatus according to an embodiment of this application;
FIG. 7 is a schematic diagram of a structure of a data processing apparatus according to an embodiment of this application; and
FIG. 8 is a schematic diagram of a structure of a data processing apparatus according to an embodiment of this application.

### DESCRIPTION OF EMBODIMENTS

In embodiment of this application, when it is difficult to capture a target image, a first mark used to indicate the target image is fused into a first image (for example, a non-target image) that is easy to obtain, to generate a sample data set of the first image; and then a target sample data set that matches the target image is determined from the sample data set of the first image. A plurality of types of target sample data similar to the target image can be generated by using the first image that is easy to obtain, and a target recognition model can be trained by using the generated target sample data instead of the manually captured target image. In this way, difficulty in obtaining training data used for training the target recognition model can be reduced, and a generalization capability and a recognition effect of the target recognition model can be improved.

It should be noted that the data processing solutions in embodiments of this application may be applied to any field. Examples are provided below.

In the medical field, the target image may be a specific type of lesion image, for example, a leg bone fracture image of a patient with a leg fracture, and the first mark may refer to an image of a lesion area included in the specific type of lesion image, for example, a fracture point image in the leg bone fracture image. In this way, the fracture point image is fused into a normal leg bone image that is easy to obtain, so that more simulated leg bone fracture images of a leg bone type can be generated, and a fracture recognition model is trained by using the more simulated leg bone fracture images of the leg bone type, to improve accuracy of recognizing a patient with a fracture, reduce working pressure of manually recognizing the patient with a fracture, and improve efficiency of automatic patient distribution.

In the field of abnormal material recognition, the target image may be a specific type of abnormal material image, and the first mark may refer to a combined image of elements included in the specific type of abnormal material image. In this way, elements in a normal material image are combined based on the combined image of the elements included in the abnormal material image, so that more simulated abnormal material images of a material type can be generated, and an abnormal material recognition model is trained by using the more simulated abnormal material images of the material type, to improve accuracy of abnormal material recognition and avoid, in advance, a risk of using an abnormal material.

In the field of autonomous driving, the target image may be a specific type of building image, for example, an image of a target building that cannot be photographed or is difficult to photograph, and the first mark may refer to an image of a marker indicating a specific type of building in the specific type of building image, for example, an image of a marker usually set on the target building that cannot be photographed or is difficult to photograph. In this way, the image of the marker usually set on the target building is fused into a non-target building image that is easy to obtain, so that more simulated target building images of a building type can be generated, and a building recognition model is trained by using the more simulated target building images of the building type, to improve accuracy of recognizing a target building by a vehicle in an autonomous driving process and facilitate autonomous driving.

A specific implementation process of the data processing method in this application is described in detail below by using an application of this application to the field of autonomous driving as an example.

In the field of autonomous driving, the data processing solutions may be specifically applied to an internet of vehicles, for example, vehicle-to-everything (vehicle-to-everything, V2X), long term evolution-vehicle (long term evolution to vehicle, LTE-V), or vehicle-to-vehicle (vehicle-to-vehicle, V2V). For example, the data processing solutions may be applied to a vehicle having an image processing function, or may be applied to another component in a vehicle having an image processing function. The another component in the vehicle includes but is not limited to a vehicle-mounted terminal, a vehicle-mounted controller, a vehicle-mounted module, a vehicle-mounted module, a vehicle-mounted component, a vehicle-mounted chip, a vehicle-mounted unit, vehicle-mounted radar, a vehicle-mounted camera, or another sensor. The vehicle may implement the data processing method provided in this application by using the vehicle-mounted terminal, the vehicle-mounted controller, the vehicle-mounted module, the vehicle-mounted module, the vehicle-mounted component, the vehicle-mounted chip, the vehicle-mounted unit, the vehicle-mounted radar, or the camera. Certainly, the data processing solutions in embodiments of this application may be further applied to another intelligent terminal having an image processing function other than a vehicle, a part disposed in another intelligent terminal having an image processing function other than a vehicle, or a component disposed in an intelligent terminal. The intelligent terminal may be another terminal device such as an intelligent transportation device, a smart home device, or a robot. For example, the intelligent terminal includes but is not limited to an intelligent terminal or another sensor such as a controller, a chip, radar, or a camera in an intelligent terminal, and another component.

In the field of autonomous driving, the data processing solutions may be further applied to an internet of vehicles server. The internet of vehicles server is a device having a data processing capability, for example, may be a physical device such as a host or a server, or may be a virtual device such as a virtual machine or a container. It should be noted that for ease of description, the internet of vehicles server is briefly referred to as a server below. That is, in a specific implementation, in a specific implementation process, the "server" in the following may be a server in a general sense, may be another device having a data processing capability, or may be a module (for example, a chip or an integrated circuit) in a device. The technical solutions in embodiments of this application are described below with reference to the accompanying drawings in embodiments of this application. It should be understood that the embodiments described below are merely some but not all of embodiments of this application. In the following descriptions, "at least one" means one or more, and "a plurality of" means two or more. In view of this, in embodiments of this application, "a plurality of" may also be understood as "at least two". The term "and/or" describes an association relationship between associated objects, and indicates that three relationships may exist. For example, A and/or B may indicate the following cases: Only A exists, both A and B exist, and only B exists. In addition, the character "/" usually indicates an "or" relationship between associated objects unless otherwise specified.

In addition, it should be understood that in the descriptions of this application, terms such as "first" and "second" are merely used for distinguishing and description, but should not be understood as an indication or implication of relative importance, or should not be understood as an indication or implication of a sequence. For example, a "first discriminative model" and a "second discriminative model" may be two discriminative models that have a same model structure and have different input/output relationships (for example, for the first discriminative model, an input is a sample data set of a first image, and an output is an output result of any sample data in the sample data set of the first image, and for the second discriminative model, an input is a first simulated data set and a preset target data set, and an output is an association relationship between the first simulated data set and a target image and an association relationship between the preset target data set and the target image). However, this does not mean that the two discriminative models have different importance or priorities.

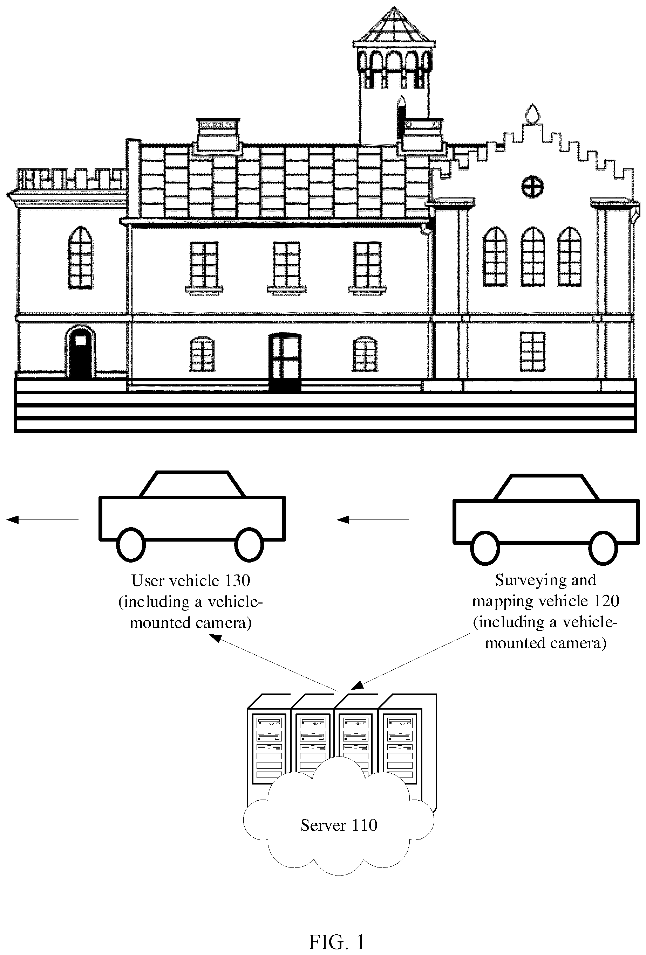

FIG. 1 is a schematic diagram of an autonomous driving system architecture to which an embodiment of this application is applicable. The system architecture shown in FIG. 1 includes a server 110, a surveying and mapping vehicle 120, and at least one user vehicle 130. A vehicle (for example, the surveying and mapping vehicle 120 and the user vehicle 130) is a vehicle in which a vehicle-mounted camera is installed. Usually, at least one vehicle-mounted camera may be installed in one vehicle. It should be understood that in this embodiment of this application, a quantity of servers 110, a quantity of surveying and mapping vehicles 120, and a quantity of user vehicles 130 in the system architecture are not limited. For example, one server 110 may exchange information with only one surveying and mapping vehicle 120 and one user vehicle 130, may exchange information with one surveying and mapping vehicle 120 and a plurality of user vehicles 130, or may exchange information with a plurality of surveying and mapping vehicles 120 and a plurality of user vehicles 130. In addition, in addition to the server 110, the surveying and mapping vehicle 120, and the user vehicle 130, the system architecture to which this embodiment of this application is applicable may further include other devices such as a core network device, a wireless relay device, and a wireless backhaul device. This is not limited in this embodiment of this application either. Furthermore, the server 110 in this embodiment of this application may integrate all functions into one independent physical device, or may deploy different functions on a plurality of independent physical devices. This is not limited in this embodiment of this application either.

In an application scenario of autonomous driving, the server 110 may be a single server or a cluster that includes a plurality of sub-servers, and the server 110 may also be referred to as a cloud server. In implementation, a person in a vehicle factory first drives or remotely controls the surveying and mapping vehicle 120 to travel along each ring line in a city, so that the surveying and mapping vehicle 120 invokes an internal vehicle-mounted camera to capture a surrounding environment image in a traveling process, and reports the image to the server 110. Then, the server 110 combines environment images on all the ring lines to construct an autonomous driving map, and delivers the autonomous driving map to the user vehicle 130 registered with the server 110, so that the user vehicle 130 can match an environment image in an autonomous driving process by using the autonomous driving map delivered by the server 110, to provide an autonomous driving service to a user. In consideration of a real-time change on the ring road, the server 110 may further periodically deliver a latest version of autonomous driving map to the user vehicle 130, to improve accuracy of providing the autonomous driving service to the user by the user vehicle 130. In addition, the server 110 may further provide other services, for example, voice navigation, flight search, an in-vehicle call, music radio, and information reading, to the user vehicle 130.

It should be noted that the surveying and mapping in the foregoing process may be performed by a dedicated surveying and mapping company or organization, instead of the person in the vehicle factory. In this case, after obtaining the autonomous driving map through surveying and mapping, the surveying and mapping company or organization may push the autonomous driving map to a person in the vehicle factory who purchases a surveying and mapping service, and the person in the vehicle factory delivers, by using the internal server, the autonomous driving map to the user vehicle registered with the server.

However, both the surveying and mapping vehicle 120 and the user vehicle 130 usually pass through, in a traveling process, a target building that cannot be photographed or is difficult to photograph. Consequently, an environment image captured by the surveying and mapping vehicle 120 or the user vehicle 130 includes a target building image. Actually, the target building image cannot be captured or is difficult to capture. Therefore, after the surveying and mapping vehicle 120 or the user vehicle 130 captures the environment image, the target building image in the environment image further needs to be first recognized by using a target recognition model, and the environment image can be used only after the target building image is covered or deleted. However, in a current phase, there is a problem that it is difficult to capture the target building image and a single type of target building image is captured. When the target recognition model is trained by using the single type of target building image, an application scope of the target recognition model is obviously reduced, which is not conducive to improving a generalization capability and a recognition effect of the target recognition model.

In view of this, this application provides a data processing method, to construct more types of target sample data sets similar to a target image by using a first mark indicating the target image (for example, an image of a marker usually set on a target building) and a first image (for example, a non-target building image) that is easy to obtain, and train a target recognition model by using the target sample data set instead of the manually captured target image, so as to reduce difficulty in obtaining training data and improve a generalization capability and a recognition effect of the target recognition model.

It should be noted that in the following embodiments of this application, the target image is an image including a real object in the real world, for example, an image obtained by manually photographing the real target building, and sample data, target sample data, and target simulated data are virtual data generated by using a method or rule. Details are as follows:

The sample data is data obtained after the first mark used to indicate the target image and a non-target image are fused together, for example, an image obtained after an image obtained by manually photographing a real non-target building is combined with a first mark found on a network.

The target sample data is data that is selected from the sample data and that is similar to the target image, for example, an image that is in the image obtained after combination and that is similar to an image that includes the real target building.

The target simulated data is data that is similar to the target sample data and that is obtained through extension based on the target sample data, for example, an image obtained by re-performing the foregoing combination process based on the image similar to the image that includes the real target building after the image is selected from the image obtained after combination.

A specific implementation process of the data processing method in this application is described below by using specific embodiments.

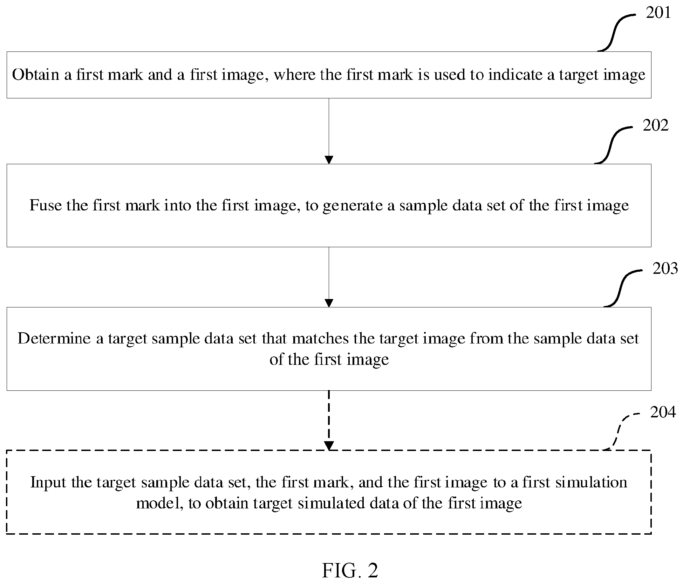

FIG. 2 is an example of a schematic flowchart of a data processing method according to an embodiment of this application. The method is applicable to a server, for example, the server 110 shown in FIG. 1. As shown in FIG. 2, the method includes the following steps.

Step 201: Obtain a first mark and a first image, where the first mark is used to indicate a target image.

In step 201, the first image can be separated from the target image, but the target image cannot be separated from the first image. For example, the target image may be an image that is difficult to obtain and corresponds to a small quantity of types, for example, an image obtained by photographing a target building that cannot be photographed or is difficult to photograph. One or more markers are usually set on the target building. The one or more markers may be objects without a biological feature, or may be individuals with a biological feature. This is not limited. Correspondingly, the first image may be an image that is easy to obtain and corresponds to a large quantity of types, for example, an image obtained by photographing a non-target building that can be photographed or is easy to photograph, or an image obtained by directly obtaining various types of building images in a manner such as downloading from a network. Usually, no marker is set on the non-target building. In this way, in this solution, the first image can be obtained in a simple and easy-to-implement obtaining manner without capturing the target image, and then an image similar to the target image can be generated. This helps reduce labor and material costs.

In this embodiment of this application, that the first mark is used to indicate a target image may mean that the target image includes the first mark. For example, when the target image is a target building image, the first mark may be an image of the one or more markers usually set on the target building, and the target image includes the image of the one or more markers. The first image usually does not include an image of a marker.

In an optional implementation, both the first mark and the first image may be obtained through downloading from a network. This obtaining manner is simple and easy to implement, neither requires to photograph the real target building, nor requires to entrust a specific person for collection, and helps reduce labor and material costs.

It should be understood that in another optional implementation, if obtaining costs and implementation complexity are not considered, the first mark and the first image may be obtained in any one or more of the following manners: sending a specific person to perform photographing, performing exchange with another device of a similar organization, or entrusting a company or organization qualified for surveying and mapping to make accumulation through long-term surveying and mapping. For example, the first mark may be obtained by capturing the image of the marker from the real target building image, or may be obtained by combining some images similar to the marker based on an actual requirement. This is not limited in this embodiment of this application.

Step 202: Fuse the first mark into the first image, to generate a sample data set of the first image.

In an optional implementation, after a plurality of first images are obtained, a small quantity of first images may be selected from the plurality of first images as second images, and the first mark is fused into the small quantity of second images, to generate the sample data set of the first image. In this case, the sample data set of the first image includes a small amount of sample data. In this implementation, the small quantity of selected second images may cover various types of buildings, to generate more types of sample data as much as possible while reducing data processing pressure. It is assumed that 50 second images are selected, and there are only three first marks. In this case, each first mark may be fused into the 50 second images, to obtain 3*50=150 pieces of sample data. Alternatively, a fusion location of the first mark in the second image may be changed to further obtain more types of sample data.

For example, when the first mark is fused into the first image, the first mark may be first combined at any location (for example, a randomly selected location or a location preset by a person in a vehicle factory) of the first image, and then operations such as deleting a redundant pixel, fading an edge, polishing, and adjusting transparency are performed on a combined image by using an image inpainting technology, so that the combined image is more similar to a real image.

Step 203: Determine a target sample data set that matches the target image from the sample data set of the first image.

In this embodiment of this application, a building on which a marker is set is not necessarily the target building. Therefore, the sample data obtained by combining the first mark and the first image is not necessarily the target building image. Therefore, after the sample data set is obtained, sample data in the sample data set further needs to be analyzed, and target sample data similar to the target building image is selected from the sample data set, to form the target sample data set.

In implementation, a small quantity of target images may be prepared in advance as most original reference images. After a plurality of types of sample data are obtained through fusion, a feature of each piece of sample data is extracted, and the feature is compared with a feature of the target image prepared in advance, to determine a similarity between each piece of sample data and the target image. When a similarity between sample data and the target image is greater than or equal to a preset similarity threshold, it indicates that the sample data is very similar to the target image, and there is a high probability that the sample data is the target image. Therefore, the sample data may be used as the target sample data, to continue to use the sample data to perform subsequent data processing. When a similarity between sample data and the target image is less than the preset similarity threshold, it indicates that the sample data differs greatly from the target image, and there is a low probability that the sample data is the target image. Therefore, the sample data may be discarded, that is, the sample data is not used as the target sample data. With reference to the target image, some sample data that is obviously different from the target image is screened out in advance from the sample data set generated by the server, so that only the target sample data similar to the target image can be used to perform subsequent data processing. This helps improve accuracy of subsequent data processing while saving computing resources.

In the foregoing content, the preset similarity threshold may be a fixed value, for example, 90%. When a similarity between sample data and the target image reaches 90% or more, the sample data may be determined as the target sample data. Alternatively, the preset similarity threshold may be calculated based on a percentage of the target sample data in all sample data. For example, when the percentage is 20%, all the sample data may be first sorted in descending order of similarities, and then top 20% of the sample data is selected from a sorted sequence as the target sample data. In this example, the preset similarity threshold is a similarity between sample data ranked 20% and the target image. This is not limited in this embodiment of this application.

In an optional implementation, the sample data set of the first image may be input to a first discriminative model, to obtain a first output result, and the target sample data set is obtained based on the first output result. The first output result includes an output result of any sample data in the sample data set of the first image. The output result of the any sample data may be any one of the following:
"real" (a third output result), used to indicate that the sample data includes the target image;
"fake" (a fourth output result), used to indicate that the sample data does not include the target image; or
"real or fake is unclear" (another fourth output result), used to indicate that it cannot be determined whether the sample data includes the target image.

In this implementation, the first discriminative model may be first obtained through training by using the small quantity of target images prepared in advance, and then all the sample data in the sample data set generated by the server may be input to the trained first discriminative model, to obtain an output result of each piece of sample data in the sample data set in a manner of performing training before recognition. Alternatively, all the sample data in the sample data set generated by the server and the small quantity of target images prepared in advance may be input to the first discriminative model that has not been trained, to obtain an output result of each piece of sample data in the sample data set in a manner of simultaneously performing training and recognition. Then, sample data with the third output result (that is, "real") may be selected from the sample data set based on the first output result as the target sample data, to construct the target sample data set, and sample data whose output result is the fourth output result (that is, "fake" or "real or fake is unclear") may be discarded.

In this implementation, the first discriminative model may be trained in any one of the following manners:

### Semi-supervised learning

In the semi-supervised learning manner, the target images (it is assumed that there are 20 target images) prepared in advance may be classified into training data and verification data (it is assumed that each part includes 10 target images) based on a random proportion or a preset proportion. The first discriminative model is first trained by using the 10 target images included in the training data, and then the 10 target images included in the verification data are input to the trained first discriminative model, to obtain output results of the 10 target images included in the verification data. Then, based on the output results of the 10 target images, a quantity of target images whose output results are "real" and a quantity of target images whose output results are "real or fake is unclear" are counted. All the 10 target images should be theoretically determined as "real". Therefore, a determining result of the target image whose output result is "real" is correct, and a determining result of the target image whose output result is "real or fake is unclear" is incorrect. A determining correctness rate of the first discriminative model can be determined based on a quantity of correct determining results and a quantity of incorrect determining results. When the determining correctness rate is greater than or equal to a preset correctness rate threshold, it indicates that the first discriminative model has a good discrimination effect, and training of the first discriminative model is completed. When the determining correctness rate is less than the preset correctness rate threshold, it indicates that a case of incorrect determining by the first discriminative model is severe. In this case, a parameter of the first discriminative model may be optimized, the prediction data may be re-input to the first discriminative model obtained after parameter optimization, and the foregoing process may be repeatedly performed based on an output result of the prediction data until a first discriminative model whose determining correctness rate reaches the preset correctness rate threshold is obtained.

### Supervised learning

In the supervised learning manner, some non-target images may be further prepared in advance, and the target images (it is assumed that there are 20 target images) and the non-target images (it is assumed that there are also 20 non-target images) prepared in advance may be classified into training data and verification data (it is assumed that each part includes half of the images) based on a random proportion or a preset proportion. The first discriminative model is first trained by using the 10 target images and the 10 non-target images included in the training data, and then the 10 target images and the 10 non-target images included in the verification data are input to the trained first discriminative model, to obtain output results of the 10 target images and output results of the 10 non-target images included in the verification data. All the 10 target images in the verification data should be theoretically determined as "real", and the 10 non-target images in the verification data should be theoretically determined as "fake". Based on the output results of the 10 target images and the 10 non-target images, a quantity of target images whose output results are "real", a quantity of target images whose output results are "fake", a quantity of non-target images whose output results are "real", and a quantity of non-target images whose output results are "fake" are counted. Determining results of the target image whose output result is "real" and the non-target image whose output result is "fake" are correct, and determining results of the target image whose output result is "fake" and the non-target image whose output result is "real" are incorrect. A determining correctness rate of the first discriminative model can be determined based on a quantity of correct determining results and a quantity of incorrect determining results. When the determining correctness rate is greater than or equal to a preset correctness rate threshold, it indicates that the first discriminative model has a good discrimination effect, and training of the first discriminative model is completed. When the determining correctness rate is less than the preset correctness rate threshold, it indicates that a case of incorrect determining by the first discriminative model is severe. In this case, a parameter of the first discriminative model may be optimized, the prediction data may be re-input to the first discriminative model obtained after parameter optimization, and the foregoing process may be repeatedly performed based on an output result of the prediction data until a first discriminative model whose determining correctness rate reaches the preset correctness rate threshold is obtained.

It should be noted that when the first discriminative model is trained in the semi-supervised learning manner or the supervised learning manner, a feature of sample data classified as "real" is actually learned with reference to the target image. This is only an optional implementation. In another optional implementation, the first discriminative model may be trained in an unsupervised learning manner. In specific implementation, the target image may not be captured, but some images unknown to be real or fake may be directly captured, features of these images unknown to be real or fake may be extracted, then images with a same feature may be classified into one category, and then a category to which each category of classified images belongs may be manually labeled. In this way, in this implementation, the first discriminative model can be obtained through training without preparing the target image in advance. This helps reduce complexity of a manual operation. This is not limited in this embodiment of this application.

It should be understood that a manner used to train the first discriminative model is not specifically limited in this embodiment of this application. For example, another optional training manner may further include one or more of a support vector machine, a neural network, linear discriminant analysis, linear regression, logistic regression, a Gaussian process, a conditional random field, or a decision tree. In specific implementation, a proper training manner may be selected based on a requirement to perform training. Details are not described in this application.

It should be noted that in step 201 to step 203, the target sample data can be changed from 0 to 1, that is, the virtual target sample data is constructed by using the first mark indicating the target image and the first image that is easy to obtain, to achieve a breakthrough of the target sample data from nothing. In this way, the generated target sample data is used to replace the manually captured target image, so that a case in which a training sample required for a target recognition model is collected in a difficult manual collection manner is avoided. This helps reduce difficulty in obtaining the training sample required for the target recognition model.

After step 203 is performed, the target recognition model may be directly trained by using the target sample data generated in step 203. However, the first mark and the first image are randomly fused to generate sample data in step 202, and in this random fusion manner, because there is no real target image as a reference, a large amount of obviously unreal sample data may be generated. Consequently, most sample data is subsequently screened out in step 203, and computing resources may be wasted. Therefore, in an optional implementation, a small amount of target sample data similar to the target image may be first generated based on step 201 to step 203, and then more target simulated data similar to the target image may be obtained through extension by using the small amount of target sample data as a reference and based on the following step 204.

Step 204: Input the target sample data set, the first mark, and the first image to a first simulation model, to obtain target simulated data of the first image.

For example, before the target sample data set is input to the first simulation model, secondary screening may be further performed on each piece of target sample data in the target sample data set. For example, target sample data that is obviously different from the target image is screened out from the target sample data set in a manual manner or another manner, and then a target sample data set obtained after screening is input to the first simulation model, so that subsequently generated target simulated data is more similar to the target image.

In an optional implementation, for any target sample data in the target sample data set, each first mark and each first image (for example, all the first marks and all the first images obtained in step 201) prepared in advance may be fused based on a fusion feature of a target first mark and a target first image in the target sample data, to obtain a large amount of target simulated data. The target sample data is similar to the target image. Therefore, the fusion feature of the target first mark and the target first image in the target sample data can indicate a fusion feature of the first mark in the target image and an image (it is assumed that the image is a building image) other than the first mark. Fusion features include a specific type of first mark and a specific type of building image that are to be fused to more easily obtain the target image, a location, of each type of building image, at which each type of first mark is to be combined to more easily obtain the target image, a specific inpainting parameter (including a quantity of redundant pixels to be deleted, an edge fading degree, a transparency ratio, and the like) to be used to more easily obtain the target image through inpainting, and the like. In this way, the first mark and various types of building images prepared in advance are fused based on these fusion features, so that various types and a large quantity of pieces of target simulated data can be obtained, to effectively compensate for a disadvantage that only a small quantity of target images can be obtained in a current phase, and the generated target simulated data can be more similar to the target building image, to improve reliability of the target simulated data.

A manner of generating the target simulated data by using an adversarial neural network is described below by using an example. The adversarial neural network usually includes a generator and a discriminator. The generator is configured to generate fake data similar to real data. The discriminator is configured to determine whether the fake data generated by the generator is real or fake. "Adversarial" in the adversarial neural network means that a parameter of the generator is adjusted to enable the generator to generate fake data that is as similar to the real data as possible, so that the discriminator cannot determine whether the virtual data is real or fake, and a parameter of the discriminator is adjusted to enable the discriminator to determine as much fake data as possible as fake. A purpose of the adversarial neural network is to achieve a specific balance between the two aspects, so as to obtain a generator with a good generation effect and a discriminator with a good discrimination effect. In this example, the first simulation model may be established in advance by using the adversarial neural network. The first simulation model includes a first generative model (namely, a generator) and a second discriminative model (namely, a discriminator). The target sample data set, the first mark, and the first image are input to the first simulation model, to obtain the target simulated data of the first image.

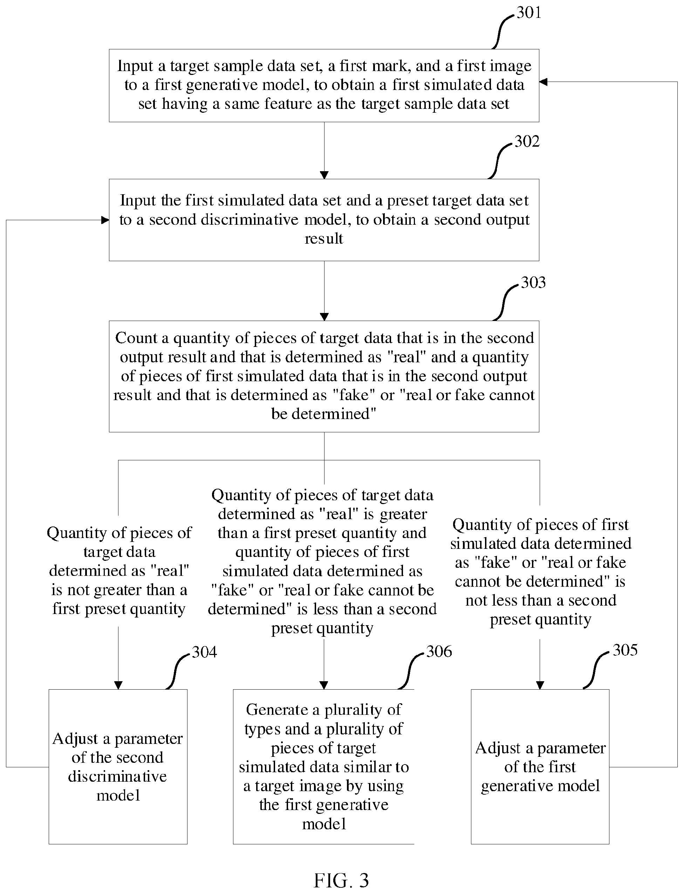

FIG. 3 is an example of a schematic flowchart of a method for generating target simulated data by using an adversarial neural network according to an embodiment of this application. As shown in FIG. 3, the method includes the following steps.

Step 301: Input the target sample data set, the first mark, and the first image to the first generative model, to obtain a first simulated data set having a same feature as the target sample data set.

In step 301, the target sample data set and the first mark and various types of first images (for example, all the first marks and all the first images in step 201) downloaded from a network in advance may be input to the first generative model, so that the first generative model first learns a fusion feature of a target first mark and a target first image in each piece of target sample data to train a parameter of the first generative model, and then fuses, based on a parameter obtained through training, the first mark and the various types of first images downloaded from the network, to generate various types of first simulated data that having a same feature as each piece of target sample data. A specific implementation process is as follows:
Step 302: Input the first simulated data set and a preset target data set to the second discriminative model, to obtain a second output result, where the preset target data set includes the target image and/or the target sample data set.

In step 302, the target sample data in the target sample data set is data with a high degree of matching with the target image. Therefore, the target sample data in the target sample data set may also be considered as the target image. In this case, both the target sample data set and the target image may be used as the preset target data set and input to the second discriminative model, to generate target simulated data similar to both the target sample data set and the target image, so as to further increase a similarity between the target simulated data and the target image. It should be noted that inputting both the target image and the target sample data set to the second discriminative model is merely an optional implementation. In another optional implementation, only the target image may be input to the second discriminative model, to obtain target simulated data similar to the target image, or only the target sample data set may be input to the second discriminative model, to obtain target simulated data similar to the target sample data set. This is not specifically limited.

In step 302, when each piece of first simulated data in the first simulated data set and each piece of target data in the preset target data set are used as input data of the second discriminative model, the second output result may include an output result of any input data. The output result of the any input data may be any one of the following:
"real" (a third output result), used to indicate that the input data includes the target image;
"fake" (a fourth output result), used to indicate that the input data does not include the target image; or
"real or fake cannot be determined" (another fourth output result), used to indicate that it cannot be determined whether the input data includes the target image.

Step 303: Count a quantity of pieces of target data that is in the second output result and that is determined by the second discriminative model as "real" (that is, the third output result) and a quantity of pieces of first simulated data that is in the second output result and that is determined by the second discriminative model as "fake" or "real or fake cannot be determined" (that is, the fourth output result).

When the quantity of pieces of target data determined by the second discriminative model as "real" is not greater than a first preset quantity, step 304 is performed.

When the quantity of pieces of first simulated data determined by the second discriminative model as "fake" or "real or fake cannot be determined" is not less than a second preset quantity, step 305 is performed.

When the quantity of pieces of target data determined by the second discriminative model as "real" is greater than a first preset quantity, and the quantity of pieces of first simulated data determined by the second discriminative model as "fake" or "real or fake cannot be determined" is less than a second preset quantity, step 306 is performed.

It should be noted that step 303 may alternatively be implemented in any one of the following three manners:

### Manner 1

A quantity of pieces of target data that is in the second output result and that is determined by the second discriminative model as "real" and a quantity of pieces of first simulated data that is in the second output result and that is determined by the second discriminative model as "real" are counted.

When the quantity of pieces of target data determined by the second discriminative model as "real" is not greater than a first preset quantity, step 304 is performed.

When the quantity of pieces of first simulated data determined by the second discriminative model as "real" is less than a second preset quantity, step 305 is performed.

When the quantity of pieces of target data determined by the second discriminative model as "real" is greater than a first preset quantity, and the quantity of pieces of first simulated data determined by the second discriminative model as "real" is not less than a second preset quantity, step 306 is performed.

### Manner 2

A quantity of pieces of target data that is in the second output result and that is determined by the second discriminative model as "fake" or "real or fake cannot be determined" and a quantity of pieces of first simulated data that is in the second output result and that is determined by the second discriminative model as "real" are counted.

When the quantity of pieces of target data determined by the second discriminative model as "fake" or "real or fake cannot be determined" is greater than a first preset quantity, step 304 is performed.

When the quantity of pieces of first simulated data determined by the second discriminative model as "real" is less than a second preset quantity, step 305 is performed.

When the quantity of pieces of target data determined by the second discriminative model as "fake" or "real or fake cannot be determined" is not greater than a first preset quantity, and the quantity of pieces of first simulated data determined by the second discriminative model as "real" is not less than a second preset quantity, step 306 is performed.

### Manner 3

A quantity of pieces of target data that is in the second output result and that is determined by the second discriminative model as "fake" or "real or fake cannot be determined" and a quantity of pieces of first simulated data that is in the second output result and that is determined by the second discriminative model as "fake" or "real or fake cannot be determined" are counted.

When the quantity of pieces of target data determined by the second discriminative model as "fake" or "real or fake cannot be determined" is greater than a first preset quantity, step 304 is performed.

When the quantity of pieces of first simulated data determined by the second discriminative model as "fake" or "real or fake cannot be determined" is not less than a second preset quantity, step 305 is performed.

When the quantity of pieces of target data determined by the second discriminative model as "fake" or "real or fake cannot be determined" is not greater than a first preset quantity, and the quantity of pieces of first simulated data determined by the second discriminative model as "fake" or "real or fake cannot be determined" is less than a second preset quantity, step 306 is performed.

A specific implementation process of an adversarial relationship between the second discriminative model and the first generative model is described below by using the determining manner shown in step 303 as an example. Any one of the manner 1 to the manner 3 may be correspondingly implemented with reference to the following content. Details are not described in this application.

Step 304: Adjust a parameter of the second discriminative model, and return to step 302.

In step 303 and step 304, when the quantity of pieces of target data determined as "real" is not greater than the first preset quantity, it indicates that the second discriminative model incorrectly determines a large amount of target data that is originally real as fake, or cannot determine whether a large amount of target data that is originally real is real or fake, and a case of incorrect determining by the second discriminative model is severe. Therefore, based on the determining result of incorrect determining, it is difficult to direct the first generative model to generate target simulated data similar to the target image. In this case, to improve a discrimination effect of the second discriminative model, the parameter of the second discriminative model may be first adjusted, then the target data and the first simulated data may be re-determined by using a second discriminative model obtained after parameter adjustment, and the foregoing analysis may be re-performed based on a determining result. The parameter of the second discriminative model is adjusted until the quantity of pieces of target data that can be determined by the second discriminative model as "real" exceeds the first preset quantity.

The first preset quantity may be empirically set by a person skilled in the art. For example, the first preset quantity may be the same as a quantity of all the pieces of target data, or may be slightly less than a quantity of all the pieces of target data, for example, set to 95% of a total quantity of all the pieces of target sample data and target images prepared in advance. When the first preset quantity is closer to the quantity of all the pieces of target data, the second discriminative model finally obtained through training has a better discrimination effect. This means that it is easier for the second discriminative model to recognize the first simulated data generated by the first generative model, and the first simulated data generated by the first generative model is less likely to be incorrectly determined as the target image by the second discriminative model.

Step 305: Adjust a parameter of the first generative model, and return to step 301.

In step 303 and step 305, the first simulated data is generated by the first generative model, and is not a real target image, and therefore is theoretically determined as fake or cannot be determined as real or fake. When the quantity of pieces of first simulated data determined as "fake" or "real or fake cannot be determined" is not less than the second preset quantity, it indicates that it is easier for the second discriminative model to recognize the first simulated data generated by the first generative model, and the first generative model cannot generate first simulated data for which it is difficult to distinguish between real and fake. Therefore, the first generative model has a poor generation effect. In this case, to improve the generation effect of the first generative model, the parameter of the first generative model may be first adjusted, then the first simulated data may be regenerated by using a first generative model obtained after parameter adjustment, the second discriminative model may be reused for determining, and the foregoing analysis may be performed based on a determining result. The parameter of the first generative model is adjusted until the first generative model can implement a case in which the quantity of pieces of first simulated data determined as "fake" or "real or fake cannot be determined" does not exceed the second preset quantity.

The second preset quantity may be empirically set by a person skilled in the art. For example, the second preset quantity may be set to 0 or a value slightly greater than 0, for example, set to 5% of a quantity of all pieces of first simulated data. When the second preset quantity is closer to 0, the first generative model finally obtained through training has a better generation effect. This means that it is more difficult for the second discriminative model to recognize the first simulated data generated by the first generative model, and the first simulated data generated by the first generative model is more likely to be incorrectly determined as the target image by the second discriminative model.

Step 306: Determine that training of the adversarial neural network ends, and generate a plurality of types and a plurality of pieces of target simulated data similar to the target image by using the current first generative model.

In step 303 to step 306, both the discrimination effect of the second discriminative model and the generation effect of the first generative model are actually used as two factors in an adversarial termination condition. When the discrimination effect of the second discriminative model does not reach an expected effect, the parameter of the second discriminative model is adjusted to improve the discrimination effect of the second discriminative model. When the generation effect of the first generative model does not reach an expected effect, the parameter of the first generative model is adjusted to improve the generation effect of the first generative model. However, as the discrimination effect of the second discriminative model is improved, it is easier for the second discriminative model to determine fakeness of the first simulated data generated by the first generative model, and consequently the generation effect of the first generative model is deteriorated. In addition, as the generation effect of the first generative model is improved, the first simulated data generated by the first generative model is more similar to the target image, and the second discriminative model is more likely to incorrectly determine the first simulated data, and consequently the discrimination effect of the second discriminative model is correspondingly deteriorated. This means that the discrimination effect of the second discriminative model and the generation effect of the first generative model are two mutually adversarial factors. In the adversarial neural network, the parameter of the second discriminative model and the parameter of the first generative model are continuously optimized by using such an adversarial relationship, to achieve a balance between the two models in continuous optimization and continuous adversarial training, so that the first generative model with a good generation effect is obtained with support of the second discriminative model with a good discrimination effect, to generate more types and a larger quantity of pieces of target simulated data that is more similar to the target image by using the first generative model with a good generation effect.

It should be noted that after the first generative model with a good generation effect is obtained, the first generative model with a good generation effect may be used to generate target simulated data that has a same fusion feature as the target sample data set, or generate target simulated data that has a same fusion feature as the target image prepared in advance. Whether the target sample data set is used as a reference, the target image prepared in advance is used as a reference, or both the target sample data set and the target image prepared in advance are used as a reference may be set by a person skilled in the art based on an actual requirement. This is not specifically limited.

In the foregoing embodiment of this application, by using two discriminative models and one generative model, more types and a larger quantity of pieces of target simulated data that is more similar to the target image can be generated with reference to a small quantity of target images, the first mark that is easy to obtain, and a plurality of types of first images, to implement a change of the target simulated data from 0 to 1 and then to infinity. In the method, only a small quantity of target images need to be prepared to generate a large amount of target simulated data, and it does not need to take a long time to perform manual collection. Therefore, a problem that the target image is difficult to capture and corresponds to a small quantity of types and a small quantity can be effectively resolved.

A change of the target simulated data from 0 to 1 is implemented in step 201 to step 203, and a change of the target simulated data from 1 to infinity is implemented in step 204.

It may be understood that the foregoing content is described by using an example in which the server is used as an execution body to implement the change of the target simulated data from 0 to 1 and then to infinity. When the server is a cluster including a plurality of sub-servers, one or more sub-servers may first implement the change from 0 to 1 to generate a small amount of target sample data, and send the small amount of target sample data to another or some other sub-servers, and then the another or some other sub-servers implements or implement the change from 1 to infinity based on the small amount of target sample data, to generate a large amount of target simulated data. In another example, a vehicle may be used as an execution body, and the vehicle implements the change from 0 to 1 and then to infinity, to generate a large amount of target simulated data. Alternatively, a vehicle and the server may be jointly used as an execution body. For example, the server first implements the change from 0 to 1 to generate a small amount of target sample data, and sends the small amount of target sample data to the vehicle, and then the vehicle implements the change from 1 to infinity based on the small amount of target sample data, to generate a large amount of target simulated data; or the vehicle first implements the change from 0 to 1 to generate a small amount of target sample data, and sends the small amount of target sample data to the server, and then the server implements the change from 1 to infinity based on the small amount of target sample data, to generate a large amount of target simulated data. The server in another example may be a single server or a cluster including a plurality of sub-servers. This is not specifically limited.

How to generate the target simulated data is described in detail in the foregoing content. Two possible applications of the target simulated data to an internet of vehicles are described below by using examples. In the internet of vehicles, the target simulated data may specifically refer to a target simulated image. It should be understood that the application is described below only by using the target simulated data generated in step 204 as an example. In implementation, the "target simulated data" in the following may be replaced with the "target sample data set" generated in step 203. For a related implementation, directly refer to the following content. Details are not described in this application.

### Application 1: Surveying and mapping phase of autonomous driving

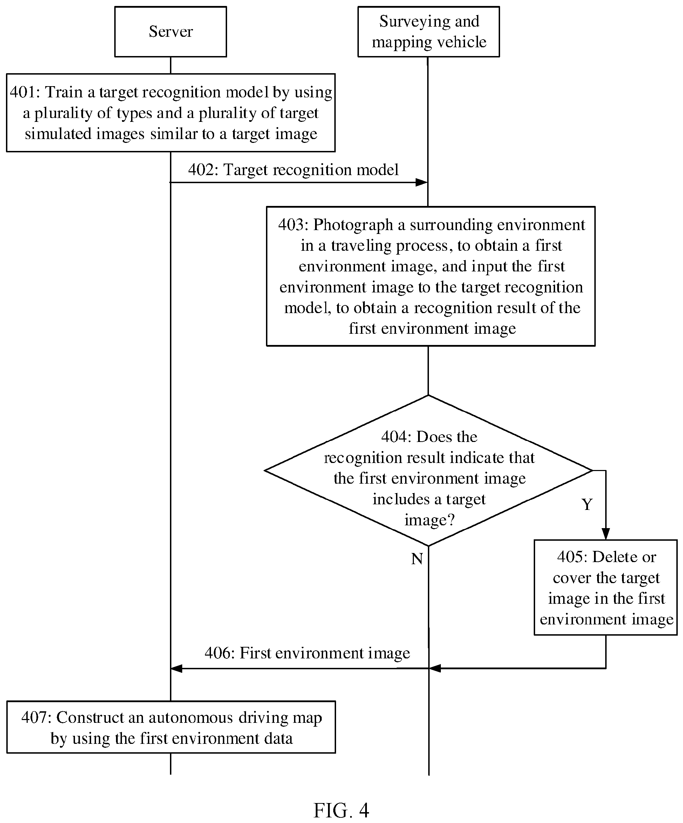

FIG. 4 is an example of a schematic flowchart of an application of a target simulated image according to an embodiment of this application. The method is applicable to a server and a surveying and mapping vehicle, for example, the server 110 and the surveying and mapping vehicle 120 shown in FIG. 1. As shown in FIG. 4, the method includes the following steps.

Step 401: The server trains a target recognition model by using a plurality of types and a plurality of target simulated images that are similar to a target image and that are generated in the foregoing method.

In an optional implementation, the server may further use both the target simulated image and the target image prepared in advance as positive sample data (that is, a label is "target building"), and then perform training in the semi-supervised learning manner described in the foregoing content, to obtain the target recognition model. Alternatively, the server may use both the target simulated image and the target image prepared in advance as positive sample data (that is, a label is "target building"), use a non-target image prepared in advance as negative sample data (that is, a label is "non-target building"), and then perform training in the supervised learning manner described in the foregoing content, to obtain the target recognition model. In this way, the target image and/or the non-target image are/is added to training data, so that a data volume and authenticity of the training data can be improved. This helps improve a recognition effect of the target recognition model.

Step 402: The server delivers the target recognition model to the surveying and mapping vehicle, so that the surveying and mapping vehicle locally stores the target recognition model.

Step 403: The surveying and mapping vehicle photographs a surrounding environment in a traveling process, to obtain a first environment image, and inputs the first environment image to the locally stored target recognition model, to obtain a recognition result of the first environment image, where the recognition result indicates whether the first environment image includes a target image.

In an example of step 403, the surveying and mapping vehicle may periodically perform recognition, for example, simultaneously input a plurality of frames of first environment images captured within a period to the target recognition model, to recognize whether the plurality of frames of first environment images include the target image. The plurality of frames of first environment images may be obtained by the surveying and mapping vehicle by photographing the surrounding environment within the period based on a preset frame rate, or may be obtained by the surveying and mapping vehicle by first capturing a surrounding environment video within the period and then capturing a surrounding environment image from the surrounding environment video. In another example of step 403, the surveying and mapping vehicle may perform recognition in real time, for example, input a frame of first environment image to the target recognition model each time the frame of first environment image is captured, to recognize, in real time, whether the first environment image includes the target image.

Step 404: The surveying and mapping vehicle determines the recognition result of the first environment image.

If it indicates that the first environment image includes the target image, step 405 is performed.

If it indicates that the first environment image does not include the target image, step 406 is performed.

Step 405: The surveying and mapping vehicle deletes or covers the target image in the first environment image.

In step 405, the deleting the target image in the first environment image may be deleting the entire first environment image, or may be deleting only pixels that belong to the target image in the first environment image. The covering the target image in the first environment image may be painting pixels that belong to the target image in the first environment image in a specific color (for example, black or white), may be making pixels that belong to the target image in the first environment image invisible by modifying transparency, or may be covering pixels that belong to the target image in the first environment image with another image (for example, a common image downloaded from a network).

Step 406: The surveying and mapping vehicle reports the first environment image to the server.

Step 407: The server constructs an autonomous driving map by using the first environment image reported by the surveying and mapping vehicle.

For example, each time the surveying and mapping vehicle travels to a location, an internal vehicle-mounted camera may be invoked to separately photograph environments on two sides of a road at the location, to obtain a plurality of first environment images, and then a current location of the surveying and mapping vehicle, the plurality of first environment images, a field of view used by the vehicle-mounted camera to capture each first environment image, and a photographing direction of the vehicle-mounted camera are reported to the server. The server performs three-dimensional scene reconstruction on the plurality of first environment images based on fields of view and photographing directions respectively corresponding to the plurality of first environment images, to simulate a three-dimensional image corresponding to the current location of the surveying and mapping vehicle, and further splices three-dimensional images simulated at all locations on a traveling track of the surveying and mapping vehicle, to obtain a complete autonomous driving map.

It should be understood that in the foregoing example, how to construct the autonomous driving map is actually described by using first environment images respectively captured on the two sides of the road at each location. In another example, the surveying and mapping vehicle may first capture only a first environment image on one side of a road, and after traveling to a destination, return to an origin, and capture a first environment image on the other side of the road in a returning process.

It should be noted that the autonomous driving map may be constructed in real time by the server based on the first environment image reported by the surveying and mapping vehicle, may be constructed by the server based on all first environment images on at least one road after the surveying and mapping vehicle completes surveying and mapping of the at least one road, or may be periodically constructed by the server based on a first environment image reported by the surveying and mapping vehicle within a period. This is not specifically limited.

In the application 1, the target recognition model is generated by using more types and a larger quantity of target simulated images that are more similar to the target image, so that a recognition capability and a generalization capability of the target recognition model can be effectively improved. The target recognition model is applied to the surveying and mapping phase of autonomous driving, so that before reporting an environment image, the surveying and mapping vehicle can recognize the target image in the environment image in advance, and delete or cover the target image. This helps construct an autonomous driving map that does not include the target image.

### Application 2: Use phase of autonomous driving

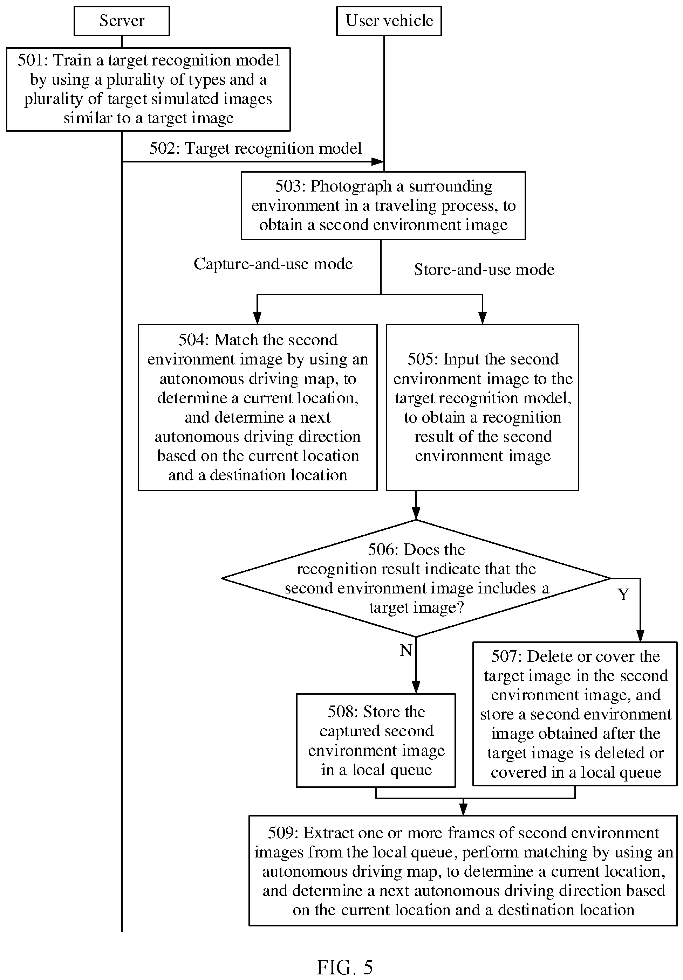

FIG. 5 is an example of a schematic flowchart of another application of a target simulated image according to an embodiment of this application. The method is applicable to a server and a user vehicle, for example, the server 110 and the user vehicle 130 shown in FIG. 1. In this example, the server (or another surveying and mapping company or organization) delivers an autonomous driving map to the user vehicle in advance, so that the user vehicle locally stores the received autonomous driving map before using the autonomous driving map. As shown in FIG. 5, the method includes the following steps.

Step 501: The server trains a target recognition model by using a plurality of types and a plurality of target simulated images that are similar to a target image and that are generated in the foregoing method.

Step 502: The server delivers the target recognition model to the user vehicle, so that the user vehicle locally stores the target recognition model.

In step 502, the user vehicle may be a vehicle registered with the server in advance. An in-vehicle infotainment application (application, APP) may be set on each user vehicle manufactured in a vehicle factory. Once a user purchases a user vehicle, an employee in the vehicle factory may indicate the user to register an account in the in-vehicle infotainment app with the server, and apply to, after the registration is successful, the server for binding the user account and the user vehicle. If the binding is successful, the server may provide a free service, for example, voice navigation and autonomous driving, to the user vehicle corresponding to the user account for a period of time. After the free service expires, if the user wants to continue to use the service, the user may recharge the user account to continue to purchase the service. In addition, the server may further retrain the target recognition model or re-construct the autonomous driving map in a preset period, in real time, or in another manner. Once it is found that the target recognition model or the autonomous driving map is updated, the server may deliver an updated target recognition model or autonomous driving map to each user vehicle corresponding to each user account registered with the server in advance, to update the target recognition model or the autonomous driving map locally stored in each user vehicle, so as to improve accuracy of autonomous driving.

Step 503: The user vehicle photographs a surrounding environment in a traveling process, to obtain a second environment image.

When a working mode of the user vehicle is a capture-and-use mode, step 504 is performed.

When a working mode of the user vehicle is a store-and-use mode, step 505 is performed.

Step 504: The user vehicle matches the second environment image by using the autonomous driving map, to determine a current location of the user vehicle, determines a next autonomous driving direction based on the current location of the user vehicle and a destination location, and then deletes the second environment image.

**In** steps 503 and 504, the capture-and-use mode means that each time the user vehicle captures a frame of second environment image, the second environment image is directly matched with the autonomous driving map, and after the matching is completed, the second environment image is directly deleted, and is not stored or forwarded. In the capture-and-use working mode, even if a target image exists in the second environment image, the target image can be deleted within a very short time after being captured. In this case, the user vehicle may directly use the second environment image to determine the next autonomous driving direction, and does not need to recognize whether the second environment image includes the target image before using the second environment image, to save processing resources, consider timeliness of autonomous driving, and improve autonomous driving experience of the user.

Step 505: The user vehicle inputs the second environment image to the locally stored target recognition model, to obtain a recognition result of the second environment image, where the recognition result indicates whether the second environment image includes a target image.

In steps 503 and 505, the store-and-use mode means that each time the user vehicle captures a frame of second environment image, the second environment image is first stored in a local queue, then one or more frames of second environment images are extracted from the local queue during use, to match the autonomous driving map, and the one or more frames of second environment images are deleted after the matching is completed. The extracted one or more frames of second environment images may be one or more frames of second environment images stored at an earliest time, so that a traveling direction is determined by sequentially determining locations of the user vehicle through positioning in a case of poor timeliness; or may be all second environment images stored within a period, so that the current location of the user vehicle is accurately determined through positioning by using a plurality of frames of second environment images captured within the same time period. In the store-and-use working mode, if a frame of second environment image includes the target image, the second environment image may not be extracted for a long time. Consequently, the target image included in the second environment image is stored in the user vehicle for a long time. In this case, before storing the second environment image, the user vehicle may first recognize, by using the target recognition model, whether the second environment image includes the target image, to avoid a phenomenon that a second environment image that carries the target image is stored for a long time.

Step 506: The user vehicle determines the recognition result of the second environment image.

If it indicates that the second environment image includes the target image, step 507 is performed.

If it indicates that the second environment image does not include the target image, step 508 is performed.

Step 507: The user vehicle deletes or covers the target image in the second environment image, stores a second environment image obtained after the target image is deleted or covered in a local queue, and then performs step 509.

In steps 506 and 507, when the second environment image includes the target image, the user vehicle may first delete or cover a pixel occupied by the target image in the second environment image, retain another pixel in the second environment image, and then store the second environment image obtained after the target image is deleted or covered in the local queue. In this way, even if the user vehicle passes through a target building and the environment image is covered or deleted before the autonomous driving map is matched, the user vehicle can still match the autonomous driving map by using a pixel corresponding to an area other than the target building in the second environment image, to implement an autonomous driving function on a road near the target building.

Step 508: The user vehicle stores the captured second environment image in a local queue, and then performs step 509.

Step 509: The user vehicle extracts one or more frames of second environment images from the local queue, matches the one or more frames of second environment images by using the autonomous driving map, to determine a current location of the user vehicle, determines a next autonomous driving direction based on the current location of the user vehicle and a destination location, and deletes the one or more frames of second environment images.

In step 509, the user vehicle may extract the one or more frames of second environment images from the local queue in a first-in-first-out manner, or may extract the one or more frames of second environment images from the local queue in a last-in-first-out manner. This is not specifically limited.

In the application 2, the target recognition model is generated by using more types and a larger quantity of target simulated images that are more similar to the target image, so that a recognition capability and a generalization capability of the target recognition model can be effectively improved. The target recognition model is applied to the application phase of autonomous driving, so that before storing an environment image, the user vehicle can first recognize the target image in the environment image, and delete or cover the target image. This helps store only an environment image that does not include the target image.

It should be noted that in the two applications, an application process of the target recognition model is actually described from a perspective of generation by the server and use by the vehicle. In another optional implementation, the target recognition model may alternatively be generated and used by the vehicle. For example, the server delivers a large quantity of target simulated images to the surveying and mapping vehicle in advance. After independently generating the target recognition model by using the large quantity of target simulated images, the surveying and mapping vehicle detects a first environment image captured by the vehicle, to generate an autonomous driving map, and sends both the target recognition model and the autonomous driving map that are generated by the vehicle to the user vehicle. The user vehicle detects, based on the target recognition model, a second environment image captured by the vehicle, and then matches the autonomous driving map, to complete autonomous driving. Alternatively, the server delivers a large quantity of target simulated images to each of the surveying and mapping vehicle and the user vehicle in advance. After independently generating a first target recognition model by using the large quantity of target simulated images, the surveying and mapping vehicle detects a first environment image captured by the vehicle, to generate an autonomous driving map, and sends the autonomous driving map to the user vehicle. After independently generating a second target recognition model by using the large quantity of target simulated images, the user vehicle detects a second environment image captured by the vehicle, and matches the autonomous driving map, to complete autonomous driving. In this implementation, the target recognition model is generated by the surveying and mapping vehicle or the user vehicle, and the server does not need to perform centralized management. This helps reduce working pressure of the server.

The data processing method in this application is further described below from another perspective.

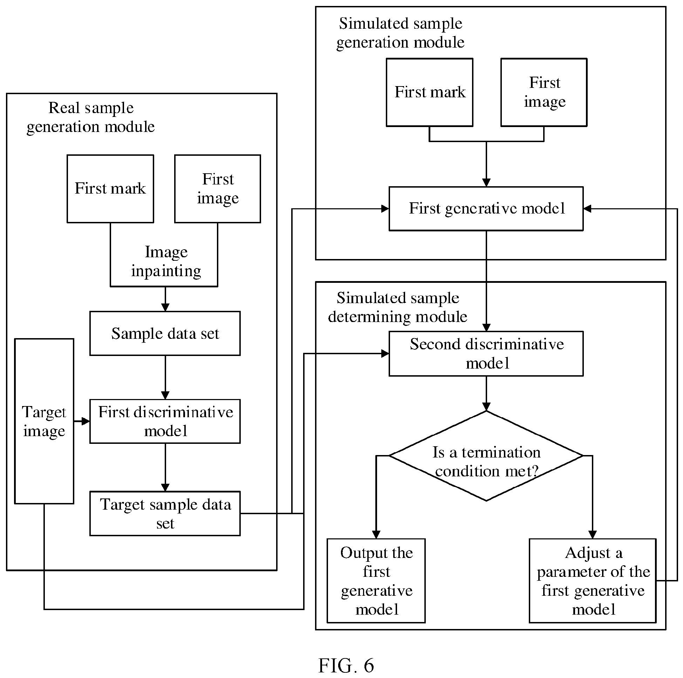

FIG. 6 is a schematic diagram of an architecture of a data processing apparatus according to an embodiment of this application. As shown in FIG. 6, the apparatus may be a server or a vehicle (for example, a surveying and mapping vehicle or a user vehicle), or may be a chip or a circuit, for example, a chip or a circuit that may be disposed in a server, for another example, a chip or a circuit that may be disposed in a surveying and mapping vehicle, or for still another example, a chip or a circuit that may be disposed in a user vehicle.

As shown in FIG. 6, the data processing apparatus may include a real sample generation module, or may further include a simulated sample generation module and a simulated sample determining module. A first discriminative model is located in the real sample generation module, a first generative model is located in the simulated sample generation module, and a second discriminative model is located in the simulated sample determining module. In implementation, the apparatus may obtain a first mark and a first image in advance through downloading from a network (or in another manner).

The real sample generation module is configured to: fuse the first mark into the first image by using an image inpainting technology, for example, select some second images from the first image, and fuse the first mark into the second image by using the image inpainting technology, to generate a small amount of sample data; and input the small amount of generated sample data and a small quantity of target images prepared in advance to the first discriminative model, to label the small amount of generated sample data after learning features of the small quantity of target images in a semi-supervised learning manner, select some generated sample data whose label is "real" from the small amount of sample data as target sample data, construct a target sample data set, and output the target sample data set to each of the simulated sample generation module and the simulated sample determining module.

The simulated sample generation module is configured to: input, to the first generative model, the target sample data set, the first mark, and the first image (for example, all first images) input by the real sample generation module, so that the first generative model fuses the first mark and the first image based on a fusion feature of a target first mark in the target sample data set, to obtain a large amount of first simulated data similar to the target sample data set (the target sample data set is obtained through screening based on the target image, and therefore the first simulated data is also similar to the target image), and then output the first simulated data to the simulated sample determining module.

The simulated sample determining module is configured to input the target sample data set input by the real sample generation module, the first simulated data input by the simulated sample generation module, and the small quantity of target images prepared in advance to the second discriminative model, to obtain a determining result of each piece of input data. When the second discriminative model determines both the target image prepared in advance and the target sample data set as "real", if a quantity of pieces of first simulated data determined by the second discriminative model as "fake" or "real or fake cannot be determined" is not less than a second preset quantity, it indicates that it is very easy for the second discriminative model to determine fakeness of the first simulated data, the first simulated data generated by the first generative model in the simulated sample generation module differs greatly from the target image, and a determining result of the first simulated data does not meet a termination condition. Therefore, the simulated sample determining module may continue to adjust a parameter of the first generative model, and cyclically perform processes such as generation, determining, and optimization, until the quantity of pieces of first simulated data determined by the second discriminative model as "fake" or "real or fake cannot be determined" is less than the second preset quantity. In this case, it is not easy for the second discriminative model to determine fakeness of the first simulated data, the first simulated data generated by the first generative model in the simulated sample generation module is very similar to the target image, the determining result of the first simulated data meets the termination condition, and a generation effect of the current first generative model meets a requirement. Therefore, the simulated sample determining module can output the current first generative model to a server, so that the server generates a plurality of types and a plurality of pieces of target simulated data similar to the target image based on the current first generative model for application to the field of autonomous driving.

It should be noted that names of the foregoing information are merely examples. With evolution of communication technologies, the name of any information may be changed. However, regardless of how the name of the information is changed, provided that a meaning of the information is the same as that of the information in this application, the information falls within the protection scope of this application.

The solutions provided in this application are mainly described above from a perspective of interaction between the network elements. It may be understood that to implement the foregoing functions, each network element includes corresponding hardware structures and/or software modules for performing the functions. It should be readily appreciated by a person skilled in the art that the example units, algorithms, and steps described with reference to embodiments disclosed in this specification can be implemented in embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of embodiments of this application.

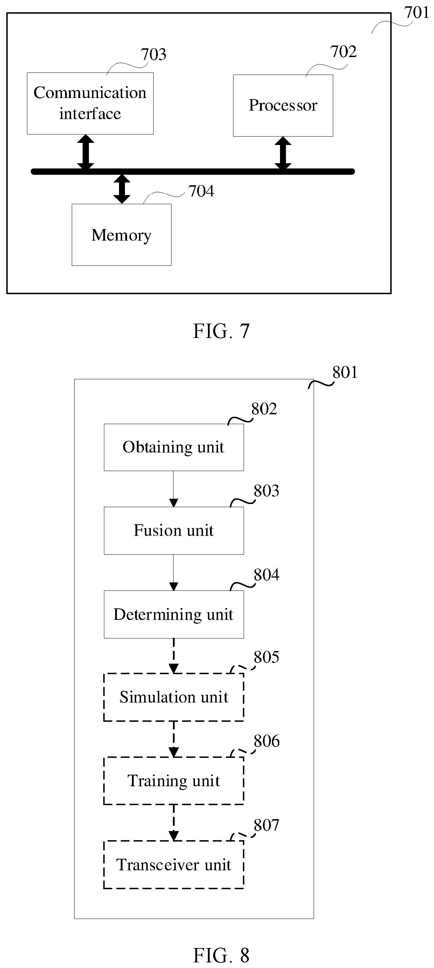

According to the foregoing method, FIG. 7 is a schematic diagram of a structure of a data processing apparatus according to an embodiment of this application. As shown in FIG. 7, the apparatus may be a server or a vehicle, or may be a chip or a circuit, for example, a chip or a circuit that may be disposed in a server, or for another example, a chip or a circuit that may be disposed in a vehicle. As shown in FIG. 7, the data processing apparatus 701 may include a processor 702, a memory 704, and a communication interface 703, and may further include a bus system. The processor 702, the memory 704, and the communication interface 703 may be connected by using the bus system.

In implementation, the memory 704 is configured to store instructions, and the processor 702 is configured to execute the instructions stored in the memory 704, to implement any one or more corresponding methods shown in FIG. 1 to FIG. 6. For example, when the method shown in FIG. 2 is implemented, the processor 702 may obtain a first image and a first mark used to indicate a target image, for example, download some first images and first marks from a network through the communication interface 703, then fuse the obtained first mark into the first image, to generate a sample data set of the first image, and then determine a target sample data set that matches the target image from the sample data set of the first image.

It should be understood that the processor 702 may be a chip. For example, the processor 702 may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

In an implementation process, the steps of the foregoing method may be implemented by using an integrated logic circuit of hardware in the processor 702, or instructions in a form of software. The steps of the methods disclosed with reference to embodiments of this application may be directly performed and completed by a hardware processor, or may be performed and completed by using a combination of hardware in the processor 702 and a software module. The software module may be located in a mature storage medium in the art, for example, a random access memory, a flash memory, a read-only memory, a programmable read-only memory, an electrically erasable programmable memory, or a register. The storage medium is located in the memory 704, and the processor 702 reads information in the memory 704, and completes the steps of the foregoing methods in combination with the hardware in the processor 702.

It should be noted that the processor 702 in this embodiment of this application may be an integrated circuit chip, and has a signal processing capability. In an implementation process, the steps in the foregoing method embodiments may be implemented by using an integrated logic circuit of hardware in the processor, or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of a hardware module in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps of the foregoing methods in combination with the hardware in the processor.

It may be understood that the memory 704 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on descriptions used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

For concepts, explanations, detailed descriptions, and other steps of the data processing apparatus that are related to the technical solutions provided in embodiments of this application, refer to the descriptions of the content in the foregoing methods or other embodiments. Details are not described herein.

Based on the foregoing embodiments and a same concept, FIG. 8 is a schematic diagram of a data processing apparatus according to an embodiment of this application. The data processing apparatus 801 may be a server or a vehicle, or may be a chip or a circuit, for example, a chip or a circuit disposed in a server, or a chip or a circuit disposed in a vehicle. As shown in FIG. 8, the data processing apparatus 801 may include an obtaining unit 802, a fusion unit 803, and a determining unit 804. For example, the data processing apparatus 801 may further include a simulation unit 805, a training unit 806, and a transceiver unit 807. The data processing apparatus 801 may implement any one or more corresponding methods shown in FIG. 1 to FIG. 6. For example, when the method shown in FIG. 2 is implemented, the obtaining unit 802 is configured to obtain a first image and a first mark used to indicate a target image, for example, download some first images and first marks from a network, the fusion unit 803 is configured to fuse the first mark into the first image, to generate a sample data set of the first image, and the determining unit 804 is configured to determine a target sample data set that matches the target image from the sample data set of the first image. When the method shown in FIG. 3 is implemented, the simulation unit 805 is configured to input the target sample data set, the first mark, and the first image to a first simulation model, to obtain target simulated data having a same feature as the target sample data set. When the method shown in FIG. 4 or FIG. 5 is implemented, the training unit 806 is configured to obtain a target recognition model through training by using the target simulated data set, and the transceiver unit 807 is configured to send the target recognition model to a vehicle, so that the vehicle recognizes, deletes, or covers, based on the target recognition model, a target image in environment data collected in a traveling process of the vehicle, where environment data obtained after the target image is deleted or covered is used for training to obtain an autonomous driving map, or is stored in a preset area, to sequentially match the environment data stored in the preset area and the autonomous driving map to determine a traveling direction.

When sending information, the transceiver unit 807 may be a sending unit or a transmitter. When receiving information, the transceiver unit 807 may be a receiving unit or a receiver. The transceiver unit 807 may be a transceiver. The transceiver, the transmitter, or the receiver may be a radio frequency circuit. When the data processing apparatus 801 includes a storage unit, the storage unit is configured to store computer instructions, the obtaining unit 802, the fusion unit 803, the determining unit 804, the simulation unit 805, or the training unit 806 is communicatively connected to the storage unit, and the obtaining unit 802, the fusion unit 803, the determining unit 804, the simulation unit 805, or the training unit 806 executes the computer instructions stored in the storage unit, so that the data processing apparatus 801 may be configured to perform the method performed in any content in FIG. 1 to FIG. 6. The obtaining unit 802, the fusion unit 803, the determining unit 804, the simulation unit 805, or the training unit 806 may be a general-purpose central processing unit (CPU), a microprocessor, or an application-specific integrated circuit (Application-Specific Integrated Circuit, ASIC).

When the data processing apparatus 801 is a chip, the transceiver unit 807 may be an input and/or output interface, a pin, a circuit, or the like, and the obtaining unit 802, the fusion unit 803, the determining unit 804, the simulation unit 805, or the training unit 806 may execute computer-executable instructions stored in a storage unit, so that a chip in the data processing apparatus 801 performs the method performed in any content in FIG. 1 to FIG. 6. Optionally, the storage unit is a storage unit in the chip, for example, a register or a cache. Alternatively, the storage unit may be a storage unit that is inside the data processing apparatus 801 and that is located outside the chip, for example, a read-only memory (Read-Only Memory, ROM), another type of static storage device that can store static information and instructions, or a random access memory (Random Access Memory, RAM).

For concepts, explanations, detailed descriptions, and other steps of the data processing apparatus 801 that are related to the technical solutions provided in embodiments of this application, refer to the descriptions of the content in the foregoing methods or other embodiments. Details are not described herein.

According to the method provided in embodiments of this application, this application further provides a computer program product. The computer program product includes computer program code, and when the computer program code is run on a computer, the computer is enabled to perform the method in any one of the embodiments shown in FIG. 1 to FIG. 6.

According to the method provided in embodiments of this application, this application further provides a computer-readable storage medium. The computer-readable storage medium stores program code, and when the program code is run on a computer, the computer is enabled to perform the method in any one of the embodiments shown in FIG. 1 to FIG. 6.

According to the method provided in embodiments of this application, this application further provides an internet of vehicles system, including the foregoing server and vehicle, for example, the server and the surveying and mapping vehicle, the server and the user vehicle, or the server, the surveying and mapping vehicle, and the user vehicle.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions may be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the protection scope of this application. This application is intended to cover these modifications and variations to this application provided that they fall within the scope defined by the appended claims.

## Claims

1. A data processing method, comprising:
obtaining a first mark and a first image, wherein the first mark is used to indicate a target image;
fusing the first mark into the first image, to generate a sample data set of the first image; and
determining a target sample data set that matches the target image from the sample data set of the first image.

2. The method according to claim 1, wherein the fusing the first mark into the first image, to generate a sample data set of the first image comprises:
determining a second image from the first image; and
fusing the first mark into the second image, to generate the sample data set of the first image.

3. The method according to claim 1 or 2, wherein the determining a target sample data set that matches the target image from the sample data set of the first image comprises:
inputting the sample data set of the first image and the target image to a first discriminative model, to obtain a first output result, wherein the first output result is used to indicate an association relationship between sample data in the sample data set of the first image and the target image; and
determining the target sample data set from the sample data set of the first image based on the first output result.

4. The method according to any one of claims 1 to 3, wherein the method further comprises:
inputting the target sample data set, the first mark, and the first image to a first simulation model, to obtain target simulated data of the first image.

5. The method according to claim 4, wherein the first simulation model comprises a first generative model and a second discriminative model; and
the inputting the target sample data set, the first mark, and the first image to a first simulation model, to obtain target simulated data of the first image comprises:
inputting the target sample data set, the first mark, and the first image to the first generative model, to obtain a first simulated data set having a same feature as the target sample data set;
inputting the first simulated data set and a preset target data set to the second discriminative model, to obtain a second output result, wherein the second output result is used to indicate an association relationship between first simulated data in the first simulated data set and the target image and an association relationship between target data in the preset target data set and the target image, and the preset target data set comprises the target image and/or the target sample data set; and
generating the target simulated data of the first image when the second output result meets a preset determining condition.

6. The method according to claim 3 or 5, wherein the first output result or the second output result comprises a third output result and a fourth output result, the third output result is used to indicate that input data comprises the target image, the fourth output result is used to indicate that input data does not comprise the target image or whether input data comprises the target image is not be determined, and the input data is sample data in the sample data set, first simulated data in the first simulated data set, or target data in the preset target data set.

7. The method according to claim 6, wherein when the second output result comprises the third output result and the fourth output result, the generating the target simulated data of the first image when the second output result meets a preset determining condition comprises:
when a quantity of pieces of target data in the target data set that is determined by the second discriminative model as the third output result is greater than a first preset quantity, and a quantity of pieces of first simulated data in the first simulated data set that is determined by the second discriminative model as the fourth output result is less than a second preset quantity, generating the target simulated data of the first image by using the first generative model.

8. The method according to claim 7, wherein the method further comprises:
when the quantity of pieces of target data in the target data set that is determined by the second discriminative model as the third output result is not greater than the first preset quantity, adjusting a parameter of the second discriminative model, and re-inputting the first simulated data set and the preset target data set to a second discriminative model obtained after parameter adjustment; or
when the quantity of pieces of first simulated data in the first simulated data set that is determined by the second discriminative model as the fourth output result is not less than the second preset quantity, adjusting a parameter of the first generative model, and re-inputting the target sample data set, the first mark, and the first image to a first generative model obtained after parameter adjustment.

9. The method according to any one of claims 4 to 8, wherein after the inputting the target sample data set, the first mark, and the first image to a first simulation model, to obtain target simulated data of the first image, the method further comprises:
obtaining a target recognition model through training by using the target simulated data; and
sending the target recognition model to a vehicle, wherein
the target recognition model is used by the vehicle to delete or cover a target image in an environment image captured in a traveling process of the vehicle, an environment image obtained after the target image is deleted or covered is used for training to obtain an autonomous driving map, or is stored in a preset area, and environment images stored in the preset area are used to sequentially match the autonomous driving map to determine a traveling direction.

10. A data processing apparatus (701, 801), wherein the data processing apparatus is configured to perform the method according to any one of claims 1 to 9.

11. A computer-readable storage medium, wherein the computer-readable storage medium stores a computer program, and when the computer program is run, the method according to any one of claims 1 to 9 is implemented.

## Patentansprüche

1. Datenverarbeitungsverfahren, umfassend:
Erhalten einer ersten Markierung und eines ersten Bildes, wobei die erste Markierung verwendet wird, um ein Zielbild anzuzeigen;
Einsetzen der ersten Markierung in das erste Bild, um einen Beispieldatensatz des ersten Bildes zu erzeugen; und
Ermitteln eines Zielbeispieldatensatzes, der mit dem Zielbild übereinstimmt, aus dem Beispieldatensatz des ersten Bildes.

2. Verfahren nach Anspruch 1, wobei das Einsetzen der ersten Markierung in das erste Bild, um einen Beispieldatensatz des ersten Bildes zu erzeugen, umfasst:
Ermitteln eines zweiten Bildes aus dem ersten Bild; und
Einsetzen der ersten Markierung in das zweite Bild, um den Beispieldatensatz des ersten Bildes zu erzeugen.

3. Verfahren nach Anspruch 1 oder 2, wobei das Ermitteln eines Zielbeispieldatensatzes, der mit dem Zielbild übereinstimmt, aus dem Beispieldatensatz des ersten Bildes umfasst:
Eingeben des Beispieldatensatzes des ersten Bildes und des Zielbildes in ein erstes diskriminierendes Modell, um ein erstes Ausgabeergebnis zu erhalten, wobei das erste Ausgabeergebnis verwendet wird, um eine Zuordnungsbeziehung zwischen Beispieldaten in dem Beispieldatensatz des ersten Bildes und dem Zielbild anzuzeigen; und
Ermitteln des Zielbeispieldatensatzes aus dem Beispieldatensatz des ersten Bildes basierend auf dem ersten Ausgabeergebnis.

4. Verfahren nach einem der Ansprüche 1 bis 3, wobei das Verfahren ferner umfasst: Eingeben des Zielbeispieldatensatzes, der ersten Markierung und des ersten Bildes in ein erstes Simulationsmodell, um simulierte Zieldaten des ersten Bildes zu erhalten.

5. Verfahren nach Anspruch 4, wobei das erste Simulationsmodell ein erstes generatives Modell und ein zweites diskriminierendes Modell umfasst; und
wobei das Eingeben des Zielbeispieldatensatzes, der ersten Markierung und des ersten Bildes in ein erstes Simulationsmodell, um simulierte Zieldaten des ersten Bildes zu erhalten, umfasst:
Eingeben des Zielbeispieldatensatzes, der ersten Markierung und des ersten Bildes in das erste generative Modell, um einen ersten simulierten Datensatz zu erhalten, der ein gleiches Merkmal wie der Zielbeispieldatensatz aufweist;
Eingeben des ersten simulierten Datensatzes und eines voreingestellten Zieldatensatzes in das zweite diskriminierende Modell, um ein zweites Ausgabeergebnis zu erhalten, wobei das zweite Ausgabeergebnis verwendet wird, um eine Zuordnungsbeziehung zwischen ersten simulierten Daten in dem ersten simulierten Datensatz und dem Zielbild und eine Zuordnungsbeziehung zwischen Zieldaten in dem voreingestellten Zieldatensatz und dem Zielbild anzuzeigen, und wobei der voreingestellte Zieldatensatz das Zielbild und/oder den Zielbeispieldatensatz umfasst; und
Erzeugen der simulierten Zieldaten des ersten Bildes, wenn das zweite Ausgabeergebnis eine voreingestellte entscheidende Bedingung erfüllt.

6. Verfahren nach Anspruch 3 oder 5, wobei das erste Ausgabeergebnis oder das zweite Ausgabeergebnis ein drittes Ausgabeergebnis und ein viertes Ausgabeergebnis umfasst, wobei das dritte Ausgabeergebnis verwendet wird, um anzuzeigen, dass Eingabedaten das Zielbild umfassen, wobei das vierte Ausgabeergebnis verwendet wird, um anzuzeigen, dass Eingabedaten das Zielbild nicht umfassen oder dass nicht ermittelt ist, ob Eingabedaten das Zielbild umfassen, und wobei die Eingabedaten Beispieldaten in dem Beispieldatensatz, erste simulierte Daten in dem ersten simulierten Datensatz oder Zieldaten in dem voreingestellten Zieldatensatz sind.

7. Verfahren nach Anspruch 6, wobei, wenn das zweite Ausgabeergebnis das dritte Ausgabeergebnis und das vierte Ausgabeergebnis umfasst, das Erzeugen der simulierten Zieldaten des ersten Bildes, wenn das zweite Ausgabeergebnis eine voreingestellte entscheidende Bedingung erfüllt, umfasst:
wenn eine Anzahl von Bestandteilen von Zieldaten in dem Zieldatensatz, die durch das zweite diskriminierende Modell als das dritte Ausgabeergebnis ermittelt werden, größer als eine erste voreingestellte Anzahl ist, und eine Anzahl von Bestandteilen von ersten simulierten Daten in dem ersten simulierten Datensatz, die durch das zweite diskriminierende Modell als das vierte Ausgabeergebnis ermittelt werden, kleiner als eine zweite voreingestellte Anzahl ist, Erzeugen der simulierten Zieldaten des ersten Bildes, indem das erste generative Modell verwendet wird.

8. Verfahren nach Anspruch 7, wobei das Verfahren ferner umfasst:
wenn die Anzahl von Bestandteilen von Zieldaten in dem Zieldatensatz, die durch das zweite diskriminierende Modell als das dritte Ausgabeergebnis ermittelt werden, nicht größer als die erste voreingestellte Anzahl ist, Anpassen eines Parameters des zweiten diskriminierenden Modells und erneutes Eingeben des ersten simulierten Datensatzes und des voreingestellten Zieldatensatzes in ein zweites diskriminierendes Modell, das nach einer Parameteranpassung erhalten wurde; oder
wenn die Anzahl von Bestandteilen von ersten simulierten Daten in dem ersten simulierten Datensatz, die durch das zweite diskriminierende Modell als das vierte Ausgabeergebnis ermittelt werden, nicht kleiner als die zweite voreingestellte Anzahl ist, Anpassen eines Parameters des ersten generativen Modells und erneutes Eingeben des Zielbeispieldatensatzes, der ersten Markierung und des ersten Bildes in ein erstes generatives Modell, das nach einer Parameteranpassung erhalten wurde.

9. Verfahren nach einem der Ansprüche 4 bis 8, wobei das Verfahren nach dem Eingeben des Zielbeispieldatensatzes, der ersten Markierung und des ersten Bildes in ein erstes Simulationsmodell, um simulierte Zieldaten des ersten Bildes zu erhalten, ferner umfasst:
Erhalten eines Zielerkennungsmodells durch ein Training, indem die simulierten Zieldaten verwendet werden; und
Senden des Zielerkennungsmodells an ein Fahrzeug, wobei
das Zielerkennungsmodell von dem Fahrzeug verwendet wird, um ein Zielbild in einem Umgebungsbild zu löschen oder abzudecken, das während eines Fahrprozesses des Fahrzeugs aufgenommen wird, wobei ein Umgebungsbild, das erhalten wird, nachdem das Zielbild gelöscht oder abgedeckt wurde, für ein Trainieren verwendet wird, um eine autonome Fahrtenkarte zu erhalten, oder in einem voreingestellten Bereich gespeichert wird, und wobei Umgebungsbilder, die in dem voreingestellten Bereich gespeichert sind, verwendet werden, um die autonome Fahrtenkarte zum Ermitteln einer Fahrtrichtung sequenziell abzugleichen.

10. Datenverarbeitungseinrichtung (701, 801), wobei die Datenverarbeitungseinrichtung konfiguriert ist, um das Verfahren nach einem der Ansprüche 1 bis 9 durchzuführen.

11. Computerlesbares Speichermedium, wobei in dem computerlesbaren Speichermedium ein Computerprogramm gespeichert ist und, wenn das Computerprogramm ausgeführt wird, das Verfahren nach einem der Ansprüche 1 bis 9 implementiert wird.

## Revendications

1. Procédé de traitement de données, comprenant :
l'obtention d'une première marque et d'une première image, la première marque étant utilisée pour indiquer une image de cible ;
la fusion de la première marque dans la première image afin de générer un ensemble de données-échantillons de la première image ; et
la détermination, à partir de l'ensemble de données-échantillons de la première image, d'un ensemble de données-échantillons de cible concordant avec l'image de cible.

2. Procédé selon la revendication 1, dans lequel la fusion de la première marque dans la première image afin de générer un ensemble de données-échantillons de la première image comprend :
la détermination d'une deuxième image à partir de la première image ; et
la fusion de la première marque dans la deuxième image afin de générer l'ensemble de données-échantillons de la première image.

3. Procédé selon la revendication 1 ou 2, dans lequel la détermination, à partir de l'ensemble de données-échantillons de la première image, d'un ensemble de données-échantillons de cible concordant avec l'image de cible comprend :
l'application, en entrée d'un premier modèle discriminatif, de l'ensemble de données-échantillons de la première image et de l'image de cible afin d'obtenir un premier résultat de sortie, le premier résultat de sortie étant utilisé pour indiquer une relation d'association entre des données-échantillons dans l'ensemble de données-échantillons de la première image et l'image de cible ; et
la détermination, à partir de l'ensemble de données-échantillons de la première image, de l'ensemble de données-échantillons de cible sur la base du premier résultat de sortie.

4. Procédé selon l'une quelconque des revendications 1 à 3, le procédé comprenant en outre :
l'application, en entrée d'un premier modèle de simulation, de l'ensemble de données-échantillons de cible, de la première marque et de la première image afin d'obtenir des données simulées de cible de la première image.

5. Procédé selon la revendication 4, dans lequel le premier modèle de simulation comprend un premier modèle génératif et un deuxième modèle discriminatif ; et l'application, en entrée d'un premier modèle de simulation, de l'ensemble de données-échantillons de cible, de la première marque et de la première image afin d'obtenir des données simulées de cible de la première image comprend :
l'application, en entrée du premier modèle génératif, de l'ensemble de données-échantillons de cible, de la première marque et de la première image afin d'obtenir un premier ensemble de données simulées ayant une même caractéristique que l'ensemble de données-échantillons de cible ;
l'application, en entrée du deuxième modèle discriminatif, du premier ensemble de données simulées et d'un ensemble prédéfini de données de cible afin d'obtenir un deuxième résultat de sortie, le deuxième résultat de sortie étant utilisé pour indiquer une relation d'association entre des premières données simulées dans le premier ensemble de données simulées et l'image de cible et une relation d'association entre des données de cible dans l'ensemble prédéfini de données de cible et l'image de cible, et l'ensemble prédéfini de données de cible comprenant l'image de cible et/ou l'ensemble de données-échantillons de cible ; et
la génération des données simulées de cible de la première image lorsque le deuxième résultat de sortie remplit une condition de détermination prédéfinie.

6. Procédé selon la revendication 3 ou 5, dans lequel le premier résultat de sortie ou le deuxième résultat de sortie comprend un troisième résultat de sortie et un quatrième résultat de sortie, le troisième résultat de sortie est utilisé pour indiquer que des données d'entrée comprennent l'image de cible, le quatrième résultat de sortie est utilisé pour indiquer que des données d'entrée ne comprennent pas l'image de cible ou qu'il n'est pas déterminé si des données d'entrée comprennent l'image de cible, et les données d'entrée sont des données-échantillons dans l'ensemble de données-échantillons, des premières données simulées dans le premier ensemble de données simulées, ou des données de cible dans l'ensemble prédéfini de données de cible.

7. Procédé selon la revendication 6, dans lequel, lorsque le deuxième résultat de sortie comprend le troisième résultat de sortie et le quatrième résultat de sortie, la génération des données simulées de cible de la première image lorsque le deuxième résultat de sortie remplit une condition de détermination prédéfinie comprend :
lorsqu'un nombre d'éléments de données de cible, dans l'ensemble de données de cible, qui sont déterminés par le deuxième modèle discriminatif comme correspondant au troisième résultat de sortie est supérieur à un premier nombre prédéfini, et qu'un nombre d'éléments de premières données simulées, dans le premier ensemble de données simulées, qui sont déterminés par le deuxième modèle discriminatif comme correspondant au quatrième résultat de sortie est inférieur à un deuxième nombre prédéfini, la génération des données simulées de cible de la première image au moyen du premier modèle génératif.

8. Procédé selon la revendication 7, le procédé comprenant en outre :
lorsque le nombre d'éléments de données de cible, dans l'ensemble de données de cible, qui sont déterminés par le deuxième modèle discriminatif comme correspondant au troisième résultat de sortie n'est pas supérieur au premier nombre prédéfini, l'ajustement d'un paramètre du deuxième modèle discriminatif, et la réapplication, en entrée d'un deuxième modèle discriminatif obtenu après l'ajustement du paramètre, du premier ensemble de données simulées et de l'ensemble prédéfini de données de cible ; ou
lorsque le nombre d'éléments de premières données simulées, dans le premier ensemble de données simulées, qui sont déterminés par le deuxième modèle discriminatif comme correspondant au quatrième résultat de sortie n'est pas inférieur au deuxième nombre prédéfini, l'ajustement d'un paramètre du premier modèle génératif, et la réapplication, en entrée d'un premier modèle génératif obtenu après l'ajustement du paramètre, de l'ensemble de données-échantillons de cible, de la première marque et de la première image.

9. Procédé selon l'une quelconque des revendications 4 à 8, le procédé comprenant en outre, après l'application, en entrée d'un premier modèle de simulation, de l'ensemble de données-échantillons de cible, de la première marque et de la première image afin d'obtenir des données simulées de cible de la première image :
l'obtention, par entraînement au moyen des données simulées de cible, d'un modèle de reconnaissance de cible ; et
l'envoi du modèle de reconnaissance de cible à un véhicule, dans lequel
le modèle de reconnaissance de cible est utilisé par le véhicule pour supprimer ou masquer une image de cible dans une image d'environnement capturée au cours du déplacement du véhicule, une image d'environnement obtenue après la suppression ou le masquage de l'image de cible est utilisée à des fins d'entraînement pour obtenir une carte de conduite autonome, ou est stockée dans une zone prédéfinie, et des images d'environnement stockées dans la zone prédéfinie sont utilisées pour être mises successivement en concordance avec la carte de conduite autonome afin de déterminer une direction de déplacement.

10. Appareil de traitement de données (701, 801), l'appareil de traitement de données étant configuré pour réaliser le procédé selon l'une quelconque des revendications 1 à 9.

11. Support de stockage lisible par ordinateur, le support de stockage lisible par ordinateur stockant un programme d'ordinateur, et le procédé selon l'une quelconque des revendications 1 à 9 étant mis en œuvre lorsque le programme d'ordinateur est exécuté.
